(19) Europäisches Patentamt
European Patent Office
Office européen des brevets

(11) Publication number: **0 058 549**
**B1**

(12) # EUROPEAN PATENT SPECIFICATION

(45) Date of publication of patent specification: **03.05.89**

(51) Int. Cl.⁴: **C 08 F 10/00,** C 08 F 4/62, C 08 F 4/64

(21) Application number: **82300742.2**

(22) Date of filing: **15.02.82**

(54) **Catalyst for polymerization of olefins.**

(30) Priority: **16.02.81 JP 20074/81**
**20.03.81 JP 39655/81**

(43) Date of publication of application:
**25.08.82 Bulletin 82/34**

(45) Publication of the grant of the patent:
**03.05.89 Bulletin 89/18**

(84) Designated Contracting States:
**AT BE CH DE FR GB IT LI LU NL SE**

(58) References cited:
**BE-A- 884 738**
**FR-A-2 335 528**

(73) Proprietor: **Asahi Kasei Kogyo Kabushiki Kaisha**
**2-6, Dojimahama 1-chome Kita-ku**
**Osaka-shi Osaka 530 (JP)**

(72) Inventor: **Sakurai, Hisaya**
**152-2, Nishinakashinden**
**Kurashiki-shi Okayama-ken (JP)**
Inventor: **Katayama, Yoshihiko**
**1110-8, Nishitomii**
**Kurashiki-shi Okayama-ken (JP)**
Inventor: **Ikegami, Tadashi**
**1165-12, Tanoue**
**Kurashiki-shi Okayama-ken (JP)**
Inventor: **Furusato, Masayasu**
**1005-1, Higashitomii**
**Kurashiki-shi Okayama-ken (JP)**

(74) Representative: **Blake, John Henry Francis et al**
**BROOKES AND MARTIN High Holborn House**
**52/54 High Holborn**
**London WC1V 6SE (GB)**

EP 0 058 549 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to a catalyst for the polymerization of olefins, particularly for the polymerization of ethylene or the copolymerization of ethylene with other olefins. It also relates to a polymerization process employing such a catalyst.

Polyolefins such as polyethylene can be produced by polymerizing olefins using a catalyst comprising a transition metal compound and an organometallic compound, i.e., a so-called Ziegler type catalyst. On an industrial scale, polyolefins are produced by the suspension polymerization, the solution polymerization or the gas phase polymerization using a Ziegler type catalyst. The conventional Ziegler type catalyst, e.g., a catalyst comprising titanium trichloride and diethylaluminum chloride is low in the catalyst activity and accordingly, the catalyst residue remaining in the polymer formed is large in amount and causes discoloration of the polymer formed or deterioration of the polymer formed by heat or oxidation. Thus it is required to purify the polymer by a complicated step of removing catalyst residue. The trend of the times is to develop a process of compact type saving energy which employs a highly active catalyst capable of eliminating the step of removing catalyst residue from the polymer formed. As the highly active catalyst, there are disclosed, for example, catalysts comprising a titanium compound supported on a magnesium compound and an organometallic compound (see Japanese Patent Publication Nos. 13050/1968, 1060/1972, 33568/1971 and 34092/1971); catalysts comprising a solid obtained by reducing a transition metal compound with an organomagnesium complex and an organometallic compound (see United States Patent Nos. 4004071, 3989878 and 4027089); and catalysts comprising a solid obtained by reacting a reaction product of an organomagnesium complex and a halogenating agent with an organometallic compound (see United States Patent No. 4159965 and Japanese Patent Application (OPI) Nos. 146290/1978, 26905/1981, 28206/1981, 32504/1981 and 47408/1982).

BE—A—884738 discloses a catalyst for use in the polymerization of α-olefins, which comprises a solid catalyst component (A) and an organometallic component (B), the component (A) being obtained by reacting a transition metal compound with the solid reaction product of an organomagnesium compound soluble in a hydrocarbon medium and reacted in said medium with a halide of boron, silicon, germanium, tin, phosphorus, antimony, bismuth or zinc. The organomagnesium compound may contain, as optional components, a metal of the 1st to 3rd groups of the Periodic Table, at least one hydrocarbon group having 1 to 20 carbon atoms and at least one electronegative group containing an oxygen atom, a nitrogen atom or a sulphur atom.

FR—A—2 335 528 discloses a catalyst formed by combining an organoaluminium compound with a titanium compound and/or a vanadium compound supported on a solid carrier prepared by the reaction of an aluminium halide and/or silicon halide with an organomagnesium compound or with the reaction product of an organomagnesium compound and one or more hydroxides of magnesium, calcium, zinc or aluminium.

Although these catalysts are highly active and compact processes using these catalysts may be achieved, there are still problems to be improved. Also, it is possible to produce polyethylenes having a low density by copolymerizing ethylene with other olefins with a Ziegler type catlayst, but in order to efficiently use olefins, catalysts having a better copolymerizability are desired.

Still there remain problems peculiar to each of the polymerization methods. For example, with increased polymerization temperatures in solution polymerization, removal of the polymerization heat evolved becomes easy and due to the decrease in the solution viscosity it is possible to increase the solution concentration, resulting in an increase in the amount of product. However, when the polymerization temperature is raised, the catalyst activity is decreased and as a result, it becomes difficult to produce polymers having a low melt index. On the other hand, in suspension polymerization and gas phase polymerization, development of catalysts capable of giving polymers having a good particle size distribution and a high bulk density is desired because shipping of polyolefins in the form of powder is possible and accordingly, a step of pelletizing polymers obtained can be eliminated if the polymers having a good particle size distribution and a high bulk density, since the polyolefins are generally shipped in the form of pellets. Furthermore, the improvement on the particle size distribution and the bulk density of polymers is an important factor for a continuous and stable operation of the suspension polymerization and the gas phase polymerization for a long period of time. Thus, there are demanded catalysts having high performances in all the aspects such as good controllability of molecular weight distribution, a good copolymerizability, a high catalyst activity at high temperatures of polymerization, a good controllability of melt index and an excellent particle size distribution of polymers in the suspension polymerization and the gas phase polymerization as well as a high catalyst activity.

We have now devised a catalyst for the polymerization of olefins capable of producing polymers having various molecular weight distributions, i.e. ranging from a narrow molecular weight distribution to a broad molecular weight distribution, at a high catalyst activity, capable of producing polymers having a good particle size distribution and a high bulk density in suspension polymerization and in gas phase polymerization and showing a high catalyst activity at high temperatures in solution polymerization.

Additional advantages of the invention will be set forth in the description that follows, and in part will be obvious from the description, or may be learned by practice of the invention.

According to the present invention there is provided a catalyst useful for polymerizing olefins, which

comprises a solid catalyst component [A] and an organometallic component [B], the component [A] being derived from a transition metal compound selected from a titanium compound, a vanadium compound, a mixture of a titanium compound and a vanadium compound and a mixture of a titanium compound and a zirconium compound, and a solid reaction product of (a) an organomagnesium compound soluble in a hydrocarbon solvent and having the formula

$$M_\alpha MgR_pX_q$$

wherein

α, p, and q each independently is 0 or a number greater than 0,

$p+q=m\alpha+2$,

$0\leqq q/(\alpha+1)<2$,

m is the valence of M,

M is a metal of the 1st to 3rd groups of the Periodic Table,

R is at least one hydrocarbon group having 1 to 20 carbon atoms, and

X is at least one hydrogen atom or electronegative group containing an oxygen atom, a nitrogen atom or a sulfur atom, with (b) at least one compound selected from halides of boron, silicon, germanium, tin, phosphorus, antimony, bismuth and zinc and hydrogen chloride, the reaction being conducted in a hydrocarbon solvent, characterised in that component [A] is obtained by reacting (1) an organometallic compound with (2) the transition metal compound in the presence of (3) the solid reaction product, and in that the solid reaction product (3) is washed with a hydrocarbon solvent by decantation or filtration prior to its use in the reaction of the organometallic compound (1) and the transition metal compound (2), and in that when the transition metal compound (2) is a titanium compound or a vanadium compound or a mixture of a titanium compound and a vanadium compound, the mol ratio of the titanium and/or vanadium compound to the magnesium atom in the solid reaction product (3) is 0.005—5:1 and the mol ratio of the organometallic compound (1) to the titanium and/or vanadium compound is 0.05—20:1, and when the transition metal compound (2) is a mixture of a titanium compound and a zirconium compound the mol ratio of the titanium compound and the zirconium compound to the magnesium atom in the solid reaction product (3) is 0.001—0.35:1, and the mol ratio of the organometallic compound (1) to the titanium and zirconium compound is 0.1—100:1.

The present invention also includes a process for producing polyolefins comprises polymerizing olefins by employing the catalyst as described above.

One of the characteristic features of this invention is that the catalyst of this invention has a high catalyst activity in suspension polymerization, solution polymerization and gas phase polymerization, and accordingly the step of removing catalyst residue can be eliminated. Furthermore, the catalyst can maintain high catalyst activity at a temperature of 200°C or higher than 200°C.

Another characteristic feature of this invention is that the catalyst of this invention can produce polymers within a wide range of molecular weight distribution, i.e. from polymers having a narrow molecular weight distribution suitable for injection molding and rotational molding to polymers having a broad molecular weight distribution suitable for extrusion molding.

Still another characteristic feature of this invention is that the catalyst of this invention can easily produce copolymers of at least two olefins having a low density in a high yield.

A further characteristic feature of this invention is that the catalyst of this invention can produce polymers having a high molecular weight, i.e. a low melt index in the solution polymerization, especially at high polymerization temperatures.

A still further characteristic feature of this invention is that the catalyst of this invention can produce polymers having an excellent particle distribution and a high bulk density. Accordingly, it is possible to increase the concentration of polymers in a polymerization reactor, resulting in an improvement on the productivity of polymers, and further shipping of polymers in the form of powder can be made easy.

Each of the component materials and the reaction conditions which can be employed for the preparation of the catalyst of this invention will now be described hereinafter in detail.

The organomagnesium compounds (a) which can be employed in the preparation of a solid reaction product (3) are represented by the formula

$$M_\alpha MgR_pX_q\cdot D_r$$

wherein M, R, X, D, α, p, q and r are the same as defined above, and include dihydrocarbyl magnesium compounds $R_2Mg$ and complexes of the dihydrocarbyl compounds with other organometallic compounds.

In this formula, R is at least one hydrocarbon group having 1 to 20 carbon atoms. Exemplary hydrocarbon groups include alkyl groups such as methyl, ethyl, propyl, butyl, amyl, hexyl, heptyl, octyl, nonyl, decyl, tetradecyl and octadecyl groups; cycloalkyl groups such as cyclohexyl group; aryl groups such as phenyl group; and aralkyl groups such as benzyl group. Of these groups, alkyl groups are preferred. M is a metal of the 1st to 3rd groups of the Periodic Table. Exemplary metals represented by M include lithium, sodium, potassium, beryllium, calcium, strontium, barium, zinc, boron and aluminum. Of these metals, lithium, beryllium, boron, aluminum and zinc are preferred due to their ease in making

hydrocarbon-soluble organomagnesium complexes. A more preferred metal is aluminum. The atomic ratio of M to Mg, i.e., $\alpha$ is zero or a number greater than zero and it is preferred to employ $\alpha$ of $0 \leqq \alpha \leqq 1$. A more preferred $\alpha$ is $0.01 \leqq \alpha \leqq 0.5$. X is a hydrogen atom, an electronegative group containing an oxygen atom, a nitrogen atom or a sulfur atom or any mixture thereof. Exemplary electronegative groups include $OR^1$, $OSiR^2R^3R^4$, $NR^5R^6$, $SR^7$ or

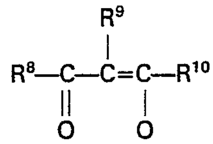

wherein $R^1$, $R^7$, $R^8$ and $R^{10}$ each independently is a hydrocarbon group having 1 to 20 carbon atoms and $R^2$, $R^3$, $R^4$, $R^5$, $R^6$ and $R^9$ each independently is a hydrogen atom or a hydrocarbon group having 1 to 20 carbon atoms. Exemplary hydrocarbon groups include alkyl groups such as methyl, ethyl, propyl, butyl, amyl, hexyl, heptyl, octyl, nonyl, decyl, tetradecyl and octadecyl groups; cycloalkyl groups such as cyclohexyl group; aryl groups such as phenyl group; and aralkyl groups such as benzyl group. Of these electronegative groups, $OR^1$ and $OSiR^2R^3R^4$ are preferred. p and q each independently is zero or a number greater than zero, and the relationship of $p+q=m\alpha+2$ wherein m is the valence of M is satisfied. This relationship shows stoichiometry between the valence of M plus Mg and the substituents. The range of $0 \leqq q/(\alpha+1) < 2$ designates that a number of X per total number of M and Mg is less than two. It is preferred to employ the range of $0 \leqq q/(\alpha+1) < 1.5$, more preferably the range of $0 \leqq q/(\alpha+1) \leqq 1$.

It is necessary that the organomagnesium compounds employed in this invention are soluble in an inert hydrocarbon medium in order for the catalyst to achieve a high catalyst activity. Generally, organomagnesium compounds with $\alpha=0$ are insoluble in an inert hydrocarbon medium but specific organomagnesium compounds are soluble in an inert hydrocarbon medium. Such organomagnesium compounds can also be used in this invention with good results. Exemplary organomagnesium compounds with $\alpha=0$ include

$$(CH_3)Mg(n\text{-}C_3H_7),\ (CH_3)Mg(i\text{-}C_3H_7),\ (C_2H_5)Mg(i\text{-}C_3H_7),\ (n\text{-}C_3H_7)Mg(i\text{-}C_3H_7),$$

$$Mg(i\text{-}C_3H_7)_2,\ (n\text{-}C_4H_9)Mg(i\text{-}C_3H_7),\ (n\text{-}C_4H_9)Mg(sec\text{-}C_4H_9),\ (C_2H_5)Mg(n\text{-}C_4H_9),$$

$$(C_2H_5)Mg(n\text{-}C_6H_{13}),\ (n\text{-}C_4H_9)Mg(n\text{-}C_8H_{17})\text{ and }Mg(C_2H_5)_{0.5}(n\text{-}C_4H_9)\ (sec\text{-}C_4H_9)_{0.5}.$$

The electron donative organic compound represented by D which can be employed in this invention is an electron donative organic compound having an oxygen atom, nitrogen atom, sulfur atom or phosphorus atom. Exemplary electron donative organic compounds include ethers such as diethyl ether, dibutyl ether, diisoamyl ether, ethylene glycol dimethyl ether, diethylene glycol dimethyl ether, glycerol trimethyl ether, vinylmethyl ether, tetrahydrofuran, dioxane, crown ether and propylene oxide; siloxanes such as hexamethyldisiloxane, symdihydrotetramethyldisiloxane, pentamethyltrihydrotrisiloxane, methylhydrocyclotetrasiloxane, methylhydropolysiloxane, dimethylpolysiloxane and phenylhydropolysiloxane; tertiary amines such as triethylamine, tributylamine, tetramethylethylenediamine, bis(diethylamino)-methane and diazabicyclooctane; nitriles such as acetonitrile, propionitrile, acrylonitrile, benzylnitrile and benzonitrile; amides such as dimethylformamide and hexamethylphosphoramide; pyridines such as pyridine and methylpyridine; thioethers such as diethyl sulfide, ethylpropyl sulfide, dipropyl sulfide and ethylene sulfide; sulfoxides such as dimethyl sulfoxide, diethyl sulfoxide and dibutyl sulfoxide; phosphines such as triethylphosphine and triphenylphosphine and esters of organic acids such as ethyl benzoate, ethyl p-toluate, ethyl thiophenecarboxylate and ethyl acetate. Of these compounds, ethers, siloxanes, amines and esters of organic acids are preferred.

The suffix r designates the amount of the electron donative organic compound coordinated with M or Mg and represents zero or a number greater than zero. A preferred range is $0 \leqq r \leqq 10$ and a more preferred range of $0 \leqq r \leqq 2$.

In order for the catalyst of this invention to show a high catalyst activity at high temperatures, it is preferred that q or r in the organomagnesium compound (a) is not zero.

The organomagnesium compounds (a) can be prepared by reacting a compound or RMgQ or $R_2Mg$ or the mixture thereof wherein R is the same as defined above and Q is a halogen atom, with an organometallic compound of $MR_m$, $MR_aX_bQ_c$, $MR_mD_r$ or $MR_aX_bQ_cD_r$ wherein M, R, X, Q, D, m and r are the same as defined above and $a+b+c=m$, or an electron donative organic compound represented by D, in an inert hydrocarbon medium such as hexane, heptane, octane, cyclohexane, benzene and toluene at a temperature of about 0°C to about 150°C, and, if necessary or if desired, further reacting reaction product with the electron donative organic compound or an alcohol, a siloxane, an amine, an imine, a thiol or a dithio compound. Exemplary methods of preparing the organomagnesium compound (a) which can be employed in this invention are described in United States Patent Nos. 4,120,883 and 4,146,549 and Japanese Patent Application (OPI) No. 26893/1981.

The compounds (b) which can be employed include halides of boron, silicon, germanium, tin, phosphorus, antimony, bismuth or zinc and hydrogen chloride and any mixtures thereof. The halides are the compounds having at least one halogen atom. Preferred halides are the chlorides. Exemplary halides include boron halides such as boron trichloride, diethylboron chloride, dibutylboron chloride, diphenylboron chloride, ethylboron dichloride, butylboron dichloride, phenylboron dichloride, ethoxyboron dichloride and boron tribromide; silicon halides such as methylchlorosilane, methyldichlorosilane, tetrachlorosilane, trichlorosilane, methyltrichlorosilane, dimethylchlorosilane, dimethyldichlorosilane, trimethylchlorosilane, ethyldichlorosilane, ethyltrichlorosilane, diethylchlorosilane, diethyldichlorosilane, triethylchlorosilane, vinyltrichlorosilane, vinyldichlorosilane, propyltrichlorosilane, propyldichlorosilane, allyltrichlorosilane, butyltrichlorosilane, butyldichlorosilane, isobutyltrichlorosilane, sec - butyltrichlorosilane, tert - butyltrichlorosilane, sym - tetramethyldichlorosilane, octyldichlorosilane, decyltrichlorosilane, decyldichlorosilane, pentachlorodisilmethylene, hexachlorodisilmethylene, hexachlorocyclotrisilmethylene, phenyltrichlorosilane, phenyldichlorosilane, benzyltrichlorosilane, ethoxytrichlorosilane, diethoxydichlorosilane, butoxydichlorosilane, octoxytrichlorosilane and tetrabromosilane; germanium halides such as tetrachlorogermane, methyltrichlorogermane, dimethyldichlorogermane, trimethylchlorogermane, ethyltrichlorogermane, butyltrichlorogermane, and ethoxytrichlorogermane; tin halides such as tin tetrachloride, methyltrichlorotin, diethyldichlorotin, dibutoxydibutyltin, trioctylchlorotin and tin tetrabromide; phosphorus halides such as phosphorus trichloride, phosphorus tribromide, phosphorus pentachloride, ethyldichlorophosphine and propyldichlorophosphine; antimony halides such as methyldichlorostibine, trimethylantimony dichloride and tripropylantimony dichloride; bismuth halides such as methyldichlorobismuthine; ethyldichlorobismuthine, butyldichlorobismuthine and dimethylchlorobismuthine; and zinc halides such as zinc chloride, ethylzinc chloride and butylzinc chloride. Of these compounds, chlorides of boron, tin, silicon or germanium are preferred in order to obtain polymers having a good particle size distribution and a high bulk density, and chlorides of silicon are more preferred.

The organometallic compounds (1) which can be employed include organometallic compounds or organo complex compounds of lithium, magnesium, aluminum or zinc. Exemplary organometallic compounds include organolithium compounds such as ethyllithium and butyllithium; organomagnesium compounds such as the same organomagnesium compounds represented by the formula

$$M_\alpha MgR_pX_q \cdot D_r$$

wherein M, R, X, D, α, p, q and r are the same as defined above, as the organomagnesium compounds (a); organoaluminum compounds such as triethylaluminum, tributylaluminum, trioctylaluminum, diethylaluminum chloride, ethylaluminum sesquichloride, ethylaluminum dichloride, dibutylaluminum chloride, decylaluminum dichloride, diethylaluminum ethoxide, dibutylaluminum ethoxide, ethylethoxyaluminum chloride, trimethylsiloxyethylaluminum chloride, tetraisobutyldialuminoxane and aluminum isoprenyl; and organozinc compounds such as diethylzinc and dibutylzinc. Of these organometallic compounds, organoaluminum compounds are preferred to achieve the advantages of this invention. It is more preferred to employ alkylaluminum compounds having an electronegative group such as a halogen atom, e.g. chlorine atom, an alkoxy group or a siloxy group as the substituent.

The transition metal compounds (2) which can be employed in this invention include halides, alkoxyhalides, alkoxides, siloxyhalides, siloxides, aromatic ring complexes and chelate compounds of titanium such as titanium tetrachloride, titanium tetrabromide, titanium tetraiodide, ethoxytitanium trichloride, propoxytitanium trichloride, butoxytitanium trichloride, octoxytitanium trichloride, diethoxytitanium dichloride, dipropoxytitanium dichloride, dibutoxytitanium dichloride, triethoxytitanium monochloride, tripropoxytitanium monochloride, tributoxytitanium monochloride, phenoxytitanium trichloride, benzoyltitanium trichloride, dicyclopentadienyltitanium dichloride, tetraisopropoxytitanium tetrapropoxytitanium, tetrabutoxytitanium, bis(triphenylsiloxy)titanium dichloride, titanium acetylacetonate and any mixtures thereof; halides, oxyhalides, alkoxyhalides and alkoxides of vanadium such as vanadium tetrachloride, vanadyl trichloride, ethoxyvanadyl dichloride, propoxyvanadyl dichloride, butoxyvanadyl dichloride, diethoxyvanadyl dichloride, dipropoxyvanadyl dichloride, dibutoxyvanadyl dichloride, tributoxyvanadyl and any mixtures thereof; any mixtures of the titanium compounds and the vanadium compounds as described above; and any mixtures of the titanium compounds and zirconium compounds such as halides, alkoxyhalides, alkoxides and chelate compounds of zirconium such as zirconium tetrachloride, zirconium tetrabromide, ethoxytrichlorozirconium, diethoxydichlorozirconium, dibutoxydichlorozirconium, ethoxytrichlorozirconium, butoxytrichlorozirconium, tetraethoxyzirconium, tetrabutoxyzirconium, zirconium acetylacetonate and any mixtures thereof.

It is preferred to employ the titanium compound having at least one halogen atom or the vanadium compound having at least one halogen atom in order to show a high catalyst activity. For this purpose, it is more preferred to employ titanium tetrachloride, vanadyl trichloride or vanadium tetrachloride. In order to achieve a high catalyst activity at a temperature of at least about 150°C, the combination of a titanium compound with a vanadium compound is effective, and the mol ratio of the vanadium compound to the titanium compound which can be employed is typically about 50:1 to about 1:50. It is possible to obtain polymers having a broader molecular weight distribution by using a combination of a titanium compound and a zirconium compound. For this purpose the mol ratio of the zirconium compound to the titanium

compound is important and typically about 0.2—10:1, preferably about 0.6—4:1, and also it is preferred to employ a zirconium compound having at least three alkoxy groups.

In preparing the solid reaction product (3), the compounds (a) and (b) may also be reacted with (c) a solid inorganic oxide and/or an electron donative compound.

Exemplary solid inorganic oxides (c) include silica, alumina, silica-alumina, magnesia, thoria, zirconia and any mixtures thereof. Of these solid inorganic oxides, silica and silica-alumina are preferred. It is preferred that the solid inorganic oxide has a BET surface area of at least about 20 $m^2/g$, more preferably at least about 100 $m^2/g$ and a particle diameter of about 0.01—500 μm, preferably about 0.1—100 μm. When prior to use the solid inorganic oxide is dried at a temperature of about 200—1200°C, preferably about 300—900°C in an inert gas atmosphere such as nitrogen gas or under reduced pressure, stable reproducibility of the catalyst activity of the catalyst according to this invention can be obtained. Use of the solid inorganic oxide not only makes the control of particle diameter of the polymers formed easy but also reduces the amounts of magnesium and a halogen atom as well as titanium, vanadium and zirconium remaining in the polymers formed.

As the electron donative organic compound (d), the same electron donative organic compound represented by D may be employed.

The reaction between the organomagnesium compound (a) and the compound (b) may be carried out by adding these two compounds into a reaction zone at the same time or by firstly charging one of them into the reaction zone and secondly adding the other into the reaction zone. The reaction temperature is not particularly limited and typically ranges from about −50°C to about 150°C. A preferred reaction temperature ranges from about 0°C to about 100°C from the viewpoint of the progress of reaction. The mol ratio of the compound (b) to the organomagnesium compound (a) which can be employed is not particularly limited and typically ranges from about 0.01—100:1. A preferred mol ratio of the compound (b) to the organomagnesium compound (a) ranges from about 0.2—10:1. The mol of the organomagnesium compound (a) means a total mol of the metal M and the magnesium atom. For example, with $AlMg(C_2H_5)_3(n\text{-}C_4H_9)_2$ as the organomagnesium compound, its molecular weight is 252 g which corresponds to two mols. The solid reaction product (3) is formed by the reaction between the organomagnesium compound (a) and the compound (b) and it is important that the solid reaction product (3) thus formed is washed by decantation or filtration prior to the subsequent reaction between the organometallic compound (1) and the transition metal compound (2) in the presence of the solid reaction product (3) in order to control this reaction.

When the solid reaction product (3) is prepared by the reaction of the organomagnesium compound (a), the compound (b) and the solid inorganic oxide (c), the organomagnesium compound (a) and the compound (b) are reacted in the presence of the solid inorganic oxide (c) under the reaction conditions as described above. The mol ratio of the organomagnesium compound (a), the compound (b) and the solid inorganic oxide (c) which can be employed is not particularly limited, and is typically about 0.05—100 mmols, preferably about 0.1—50 mmols of the organomagnesium compound (a) per gram of the solid inorganic oxide (c). The same mol ratio of the compound (b) to the organomagnesium compound (a) as described above can be employed.

The mol ratio of the electron donative organic compound (d) to the magnesium atom in the solid reaction product (3) which can be employed is typically about 0.01—100:1, preferably about 0.1—20:1. The reaction between a reaction product of the organomagnesium compound (a) and the compound (b) or a reaction product of the organomagnesium compound (a), the compound (b) and the solid inorganic oxide (c), and an electron donative organic compound (d) may be carried out at a temperature of about 0°C to about 100°C at a concentration of at most one mol of the electron donative organic compound (d) per liter of the reaction medium.

Details will now be given of the preparation of the solid catalyst component [A] by the reaction of the organometallic compound (1) and the transition metal compound (2) in the presence of the solid reaction product (3).

This reaction can be carried out by (i) simultaneously adding the organometallic compound (1) and the transition metal compound (2) to a suspension of the solid reaction product (3) in an inert hydrocarbon reaction medium; (ii) firstly adding one of the organometallic compound (1) and the transition metal compound (2) to the suspension of the solid reaction product (3) and secondly adding the other compound to the resulting mixture suspension; or (iii) firstly adding one of the two transition metal compounds (2) to the suspension of the solid reaction product (3) in the case of a mixture of two transition metal compounds (2), secondly adding the organometallic compound (1) to the resulting mixture suspension and thirdly adding thereto the other transition metal compound (2). The reaction temperature and the reaction time are not particularly limited. The reaction temperature typically ranges from about −50°C to about 150°C, preferably from about 0°C to about 100°C and the reaction time typically ranges from about one minute to about 24 hours. The ratio of the organometallic compound (1), the transition metal compound (2) and the solid reaction product (3) is important to achieve the advantages of this invention. When the transition compound (2) is a titanium compound, a vanadium compound or a mixture of a titanium compound and a vanadium compound, the mol ratio of the titanium compound and/or the vanadium compound to the magnesium atom in the solid reaction product which can be employed is typically about 0.005—5:1, preferably about 0.01—0.5:1. The amount of the organometallic compound (1) which can be employed

depends upon that of the transition metal compound (2), and the mol ratio of the organometallic compound (1) to the titanium compound and/or the vanadium compound which can be employed is typically about 0.05—20:1, preferably about 0.4—10:1. In order to obtain polymers having a narrow molecular weight distribution at a high catalyst activity, the valence of the titanium atom and the vanadium atom in the solid catalyst component [A] is important. It is preferred that the valence of the titanium atom in the solid catalyst component [A] is mostly three and that of the vanadium atom is mostly three or four. On the other hand, when the transition compound (2) is a mixture of a titanium compound and a zirconium compound, the mol ratio of the titanium compound and the zirconium compound to the magnesium atom in the solid reaction product (3) which can be employed is typically about 0.001—0.35:1, preferably about 0.005—0.25:1 and more preferably about 0.01—0.1:1. In order to obtain polymers having a broader molecular weight distribution, the mol ratio of the titanium compound in the mixture of a titanium compound and a zirconium compound to the magnesium atom in the solid reaction product (3) is typically at most about 0.23:1, preferably about 0.0005—0.2:1 and the mol ratio of the zirconium compound to the titanium compound is preferably about 0.2—10:1, more preferably about 0.6—4:1. The amount of the organometallic compound (1) which can be employed depends upon that of the transition metal compound (2), and the mol ratio of the organometallic compound (1) to the titanium compound plus the zirconium compound is typically about 0.1—100:1, preferably about 0.5—50:1.

The solid catalyst component [A] as such after completion of the reaction may be supplied to the polymerization of olefins or the solid catalyst component [A] formed may be firstly separated by filtration or washed by decantation and secondly supplied to the polymerization of olefins.

The solid catalyst component [A] thus obtained is employed in combination with an organometallic component [B] as the catalyst for the polymerization of olefins.

Exemplary organometallic components [B] which can be used in this invention are organoaluminum compounds including trialkylaluminums such as $Al(C_2H_5)_3$, $Al(C_3H_7)_3$, $Al(C_4H_9)_3$, $Al(C_5H_{11})_3$, $Al(C_6H_{13})_3$, $Al(C_8H_{17})_3$ and $Al(C_{10}H_{21})_3$, alkylaluminum hydrides such as $Al(C_2H_5)_2H$ and $Al(i\text{-}C_4H_9)_2H$, alkylaluminum halides such as $Al(C_2H_5)_2Cl$, $Al(C_2H_5)Cl_2$, $Al(i\text{-}C_4H_9)_2Cl$ and $Al(C_2H_5)_2Br$, alkylaluminum alkoxides such as $Al(C_2H_5)_2(OC_2H_5)$ and $Al(i\text{-}C_4H_9)_2(OC_4H_9)$, alkylaluminum siloxides such as

$$Al(C_2H_5)_2(OSiH \cdot CH_3 \cdot C_2H_5) \text{ and } Al(i\text{-}C_4H_9)[OSi(CH_3)_2 \cdot i\text{-}C_4H_9]_2,$$

reaction products of a trialkylaluminum and a conjugated diene such as aluminum isoprenyl and aluminum myrcenyl; organozinc compounds such as dialkylzincs including $Zn(C_2H_5)_2$, $Zn(C_4H_9)_2$, $Zn(C_6H_{13})_2$, $Zn(C_8H_{17})_2$ and $Zn(C_2H_5)(n\text{-}C_3H_7)$, diarylzincs such as $Zn(C_6H_5)_2$ and alkylzinc alkoxides such as $Zn(C_3H_7)(OC_4H_9)$; the same organomagnesium compounds (a) as described above, and any mixtures thereof. Of these organometallic compounds, organoaluminum compounds are preferred, and trialkylaluminums and dialkylaluminum hydrides are more preferred.

The solid catalyst component [A] and the organometallic compound [B] may be added under the polymerization conditions to a polymerization zone or may be combined prior to the polymerization of olefins.

The combination amount of the solid catalyst component [A] and the organometallic component [B] which can be employed depends upon the mol ratio of the transition metal in the solid catalyst component [A] to the organometallic component [B]. The mol ratio of the organometallic component [B] to the transition metal in the solid catalyst component [A] is typically about 3—1000:1, preferably about 5—500:1.

The catalyst of this invention which comprises a contact reaction product of the solid catalyst component [A] and the organometallic component [B] can produce polymers having a varied range of molecular weight distribution, i.e., a narrow molecular weight distribution to a broad molecular distribution but it is possible to produce polymers having a broader molecular weight distribution by employing a halogenated hydrocarbon [C].

Exemplary halogenated hydrocarbons include dichloromethane, chloroform, carbon tetrachloride, 1,2 - dichloroethane, 1,1,2 - trichloroethane, 1,1,2,2 - tetrachloroethane, propyl chloride, 1,2 - dichloropropane, 1,2,3 - trichloropropane, butyl chloride, 1,2 - dichlorobutane, 1,2,3,4 - tetrachlorobutane, hexyl chloride, phenyl chloride, benzyl chloride, bromoform, 1,2 - dichlorobutane and methyl iodide. Of these compounds, chlorinated hydrocarbons are stable and easily handled. It is preferred to employ halogenated hydrocarbons where the atomic ratio of the halogen atom to the carbon atom is at least one. The mol ratio of the halogenated hydrocarbon [C] to the organometallic component [B] which can be employed is typically about 0.01—100:1, preferably about 0.1—10:1.

As for the polymerization method, there may be employed a conventional suspension polymerization or solution polymerization in the presence of a polymerization medium and a conventional gas phase polymerization in the absence of a polymerization medium. In the case of the suspension polymerization, the catalyst is introduced into a reactor together with a polymerization medium, e.g., an aliphatic hydrocarbon such as propane, butane, isobutane, pentane, isopentane, hexane or heptane; an aromatic hydrocarbon such as benzene or toluene; or an alicyclic hydrocarbon such as cyclohexane or methylcyclohexane, and an olefin is added under a pressure of about 1 to 50 $Kg/cm^2$ (9.8 to $490 \times 10^4$ Pa) in an inert atmosphere and allowed to polymerize at a temperature of from room temperature to about 110°C. In order to obtain copolymers of ethylene with other olefins having a low density in the form of powder

having a good particle size distribution, it is preferred to employ an aliphatic hydrocarbon having at most four carbon atoms such as propane, butane and isobutane as the polymerization medium. In the case of the solution polymerization, the catalyst is introduced into a reactor together with the same reaction medium as employed in the suspension polymerization and an olefin is added under a pressure of from about 1 to 400 $Kg/cm^2$ (9.8 to $3920\times10^4$ Pa), preferably from about 10 to 250 $Kg/cm^2$ (98 to $2450\times10^4$ Pa) in an inert atmosphere and allowed to polymerize at a temperature of from about 120°C to about 350°C, preferably from about 150°C to about 320°C. The gas phase polymerization can be conducted under an olefin pressure of about 1 to 50 $Kg/cm^2$ (9.8 to $490\times10^4$ Pa) at a temperature of from room temperature to about 120°C using a fluidized bed, a moving bed or mixing with a stirrer to provide better contact between the olefin and the catalyst.

There may be employed single stage polymerization having one polymerization zone or multistage polymerization having a plurality of polymerization zones. According to the polymerization process of this invention, polymers having a broad molecular weight distribution may be produced even in the single stage polymerization but it is also possible to produce polymers having a broad molecular weight distribution in the multistage polymerization. In order to control the molecular weight of polymers, the temperature of the reactor may be varied or it is also possible to add hydrogen or an organic compound which can easily cause chain transfer.

According to the catalyst of this invention, polyethylenes having a low density can be produced by the copolymerization of ethylene with another olefin. Exemplary olefins other than ethylene include propylene, 1-butene, 1-pentene, 1-hexene, 1-heptene, 1-octene, 1-nonene, 1-decene, 1-dodecene, 1-tetradecene and 4-methyl-1-pentene. In order to obtain polyethylenes having a low density which possess a good particle size distribution in the suspension polymerization or in the gas phase polymerization, it is possible to conduct the copolymerization of ethylene with another olefin after a small amount of ethylene has been pre-polymerized.

Furthermore, polymers having a considerable amount of double bonds in their main chain or side chain can be produced by conducting the polymerization of olefins in the presence of a small amount of a conjugated diolefin such as butadiene, isoprene, 1,4-hexadiene, myrcene and ethylidene-2-norbornene or a non-conjugated diolefin such as 1,4-pentadiene, 1,5-hexadiene and vinylchlohexene.

The following examples of preferred embodiments further illustrate the principle and practice of the invention.

In the following examples,

MI is the melt index measured according to ASTM D-1238, wherein the temperature and the load employed are 190°C and 2.16 Kg, respectively;

FR is the quotient of the melt high-load index measured at a temperature of 190°C and a load of 21.6 Kg divided by MI; the larger the quotient, the broader is the molecular weight distribution;

Mesh is measured according to JIS Z8801-1966; and

The term "catalyst activity" shows the amount of a polymer formed in kilogram per gram of transition metal.

Example 1

(I) Synthesis of organomagnesium compound (a)

In a 200 ml flask purged with nitrogen was charged 5 g of magnesium powder, and then 30 ml of n-octane containing 2 mmols of butoxyaluminum dichloride, and the temperature was raised to 100°C. Subsequently to the flask was added dropwise 70 ml of n-octane containing 100 mmols of n-butyl chloride and 100 mmols of ethyl bromide with stirring at 100°C for 2 hours. After completion of the dropwise addition, the reaction mixture was stirred at 100°C further for one hour. The solids formed were separated by filtration and the filtrate was subjected to analysis and found to have 0.85 ml/l of Mg and 0.017 mol/l of Al. Then 80 ml of this filtrate was accurately measured and charged in a 200 ml flask purged with nitrogen and 35.4 mmols of n-butyl alcohol was added thereto at 0°C with stirring and the reaction was continued at 30°C further for one hour. As a result of analysis, the composition of the reaction solution obtained was found to have

$$Al_{0.02}Mg(C_2H_5)_{0.77}(n\text{-}C_4H_9)_{0.77}(On\text{-}C_4H_9)_{0.52}$$

and the concentration of this compound was 0.86 mol per liter of the reaction solvent.

(II) Synthesis of solid catalyst component [A]

The oxygen and moisture present inside a 250 ml flask equipped with a dropping funnel and a water-cooled reflux condenser were removed by replacement with nitrogen, and to the flask were charged 25 ml of a n-heptane solution containing trichlorosilane in an amount of one mol per liter of n-heptane and 25 ml of n-heptane in a nitrogen atmosphere, and the temperature was raised to 70°C. Then 25 ml of the organomagnesium compound (a) as obtained in (I) and 25 ml of n-heptane were accurately measured and charged in the dropping funnel, and then were added dropwise to the flask at 70°C with stirring over 2 hours, resulting in a white suspension reaction solution. The suspension reaction solution was cooled to room temperature, left to stand, and the supernatant liquid was removed by decantation. The reaction

product obtained was washed twice with 50 ml of n-heptane, and then n-heptane was added to the reaction product to adjust the amount of the liquid to 100 ml. To this suspension were added 1.4 mmols of titanium tetrachloride and 3.2 mmols of diethylaluminum chloride, and the reaction was carried out at 60°C for two hours. After completion of the reaction, the reaction mixture solution was cooled, and n-heptane was added thereto to form 200 ml of a suspension.

(III) Polymerization—1

In a 1.5 l autoclave having been dehydrated and evacuated were charged the solid catalyst component [A] as prepared in (II) in an amount of 0.002 mmol per titanium atom and 0.25 mmol of triisobutylaluminum together with 800 ml of dehydrated and deaerated isopentane. After 150 mmols of 1-butene was introduced into the autoclave, the internal temperature of the autoclave was raised to 80°C. Then hydrogen was added up to 0.5 Kg/cm$^2$ (4.9×10$^4$ Pa) and subsequently ethylene was added up to a total gauge pressure of 6 Kg/cm$^2$ (59×10$^4$ Pa). The polymerization was carried out for one hour while the total gauge pressure of 6 Kg/cm$^2$ (59×10$^4$ Pa) was maintained by supplying additional ethylene. As a result, there was obtained 61 g of powder, and the catalyst activity was 635 Kg/g · Ti. The polymer powder obtained showed a MI of 2.6, a FR of 24, a density of 0.932 and a bulk density of 0.40 g/cm$^3$, and more than 60% by weight of the polymer powder had a particle size of 105 μm to 146 μm.

Polymerization—2

In a 1.5 l autoclave having been dehydrated and evacuated were charged the solid catalyst component [A] as prepared in (II) in an amount of 0.002 mmol per titanium atom and 0.1 mmol of triethylaluminum together with 800 ml of dehydrated and deaerated cyclohexane. After 3 mmols of hydrogen and 900 mmols of 1-octane were charged in the autoclave, the internal temperature of the autoclave was raised to 180°C and ethylene was added up to a total gauge pressure of 19 Kg/cm$^2$ (186×10$^4$ Pa). The polymerization was carried out for 20 minutes while the total gauge of pressure of 19 Kg/cm$^2$ (186×10$^4$ Pa) was maintained by supplying additional ethylene. As a result, there was obtained 40 g of a polymer, and the catalyst activity was 417 Kg/g · Ti. The polymer obtained showed a MI of 3.4, a FR of 23 and a density of 0.921.

Polymerization—3

Gas phase polymerization was conducted using a 50 l stainless steel autoclave of fluidized bed type. In the autoclave whose temperature had been adjusted to 80°C were charged the solid catalyst component [A] as prepared in (II) in an amount of 0.07 mmol per titanium atom and 15 mmols of triethylaluminum, and the polymerization was conducted by introducing a mixed gas consisting of ethylene, 1-butene and hydrogen at a mol ratio of 1:0.25:0.02 into the autoclave at a rate of 15 cm/second for one hour at a gauge pressure of 10 Kg/cm$^2$ (98×10$^4$ Pa). As a result, there was obtained 1300 g of a powder polymer having a bulk density of 0.38 g/cm$^3$. The catalyst activity was 387 Kg/g · Ti and the polymer showed a MI of 4.3, a FR of 26 and a density of 0.927.

Examples 2 to 15

The oxygen and moisture present inside a 250 ml flask equipped with a dropping funnel and a water-cooled reflux condenser were removed by replacement with nitrogen, and to the flask were charged 30 ml of a n-heptane solution containing methyldichlorosilane in an amount of one mol per liter of n-heptane and 20 ml of n-heptane in a nitrogen atmosphere, and the temperature was raised to 80°C. Then 50 ml of a n-heptane solution containing 20 mmols of

$$Al_{0.1}Mg(C_2H_5)_{0.8}(n\text{-}C_8H_{17})_{0.4}(On\text{-}C_4H_9)_{1.1}$$

was accurately measured, charged in the dropping funnel and added dropwise to the flask at 80°C with stirring over one hour, resulting in a white suspension reaction solution. The suspension reaction solution was cooled to room temperature, left to stand, and the supernatant liquid was removed by decantation. The reaction product obtained was washed three times with 50 ml of n-heptane, and then n-heptane was added to the reaction product to form 100 ml of a suspension. To the suspension was added the organometallic compounds (1) as set forth in Table 1, and the mixture was stirred at 60°C for 30 minutes. Then to the reaction mixture solution was added the transition metal compound (2) as set forth in Table 1, and the reaction was carried out at 60°C for four hours. The reaction mixture solution was left to stand, and the supernatant liquid was removed and then n-heptane was newly added to the reaction product to form a suspension which was employed as the solid catalyst component [A] in the polymerization.

The same copolymerization of ethylene and 1-octane as in Polymerization—2 of Example 1 was repeated except that the solid catalyst component [A] as obtained above in an amount of 0.002 mmol per titanium atom or titanium atom plus vanadium atom and 0.05 mmol of triethylaluminum were employed. The results are shown in Table 1.

Table 1

| Example No. | Organometallic Compound (1) (mmol) | | Transition Metal Compound (2) (mmol) | | Results of Polymerization: Catalyst Activity [Kg/g·T or (T+V)] | MI | FR | Density |
|---|---|---|---|---|---|---|---|---|
| 2 | $Al(i-C_4H_9)Cl_2$ | 4.84 | $TiCl_3(On-C_4H_9)$ | 1.21 | 730 | 4.6 | 23 | 0.927 |
| 3 | $Al(C_2H_5)_2Cl$ | 2.52 | $TiCl_4$ | 0.28 | 714 | 2.3 | 26 | 0.920 |
| 4 | $Al(C_2H_5)_2Cl$ | 7.28 | $TiCl_4$ | 9.1 | 669 | 3.5 | 27 | 0.922 |
| 5 | $Al(C_2H_5)_3$ | 273 | $TiCl_2(Oi-C_3H_9)_2$ | 18.2 | 420 | 14.2 | 32 | 0.926 |
| 6 | $Al(C_2H_5)_2(OC_2H_5)$ | 1.82 | $TiCl_{3.5}(On-C_4H_9)_{1.5}$ | 0.91 | 871 | 3.6 | 23 | 0.920 |
| 7 | $Al(C_2H_5)_2Cl$ | 11.4 | $TiCl_4$ | 2.28 | 895 | 4.2 | 25 | 0.921 |
| 8 | $Al(n-C_4H_9)(On-C_6H_{13})Cl$ | 0.86 | $TiCl_4$ | 0.57 | 750 | 9.2 | 21 | 0.925 |
| 9 | $Al(C_8H_{17})_2(OSi·H·CH_3·C_8H_{17})$ | 4.37 | $TiCl_4$ + $VOCl_3$<br>0.91 2.73 | | 743 | 6.1 | 19 | 0.922 |
| 10 | $Al(C_2H_5)_2Cl$ | 5.6 | $TiCl_4$ | 0.56 | 780 | 1.2 | 22 | 0.924 |
| 11 | $Al(C_2H_5)_2Cl$ | 0.03 | $TiCl_4$ | 0.09 | 526 | 5.5 | 33 | 0.926 |
| 12 | $(i-C_4H_9)_2AlOAl(i-C_4H_9)_2$ | 0.04 | $TiCl_4$ + $VO(OC_4H_9)_3$<br>0.10 0.10 | | 600 | 8.9 | 30 | 0.922 |
| 13 | $MgAl(C_2H_5)_3(n-C_4H_9)_2$ | 0.007 | $TiCl_4$ | 0.12 | 392 | 11.5 | 32 | 0.929 |
| 14 | $(n-C_4H_9)Li$ | 0.68 | $TiCl_4$ | 0.06 | 438 | 10.2 | 39 | 0.927 |
| 15 | $Zn(C_2H_5)_2$ | 3.70 | $TiCl_4$ | 12.2 | 305 | 12.5 | 42 | 0.929 |

Examples 16 to 25

The oxygen and moisture present inside a 250 ml flask equipped with two dropping funnels and a water-cooled reflux condenser were removed by replacement with nitrogen, and to the flask was charged 40 ml of n-hexane in a nitrogen atmosphere. Then 30 ml of n-hexane containing the organometallic compound (a) as set forth in Table 2 and 30 ml of n-hexane containing 30 mmols of trichlorosilane were accurately measured and charged in the dropping funnels, respectively. After the internal temperature of the flask was adjusted to the temperature as set forth in Table 2, the both in the dropping funnels were simultaneously added dropwise to the flask with stirring over a period of time as set forth in Table 2. After completion of the reaction, the solids formed were washed with n-hexane by decantation, and n-hexane was added to the solids to form 200 ml of a suspension. To the suspension were added 7 mmols of titanium tetrachloride and 7 mmols of diethylaluminum ethoxide, and the reaction was carried out at 40°C for three hours. Then the solids formed were separated from the reaction mixture solution by filtration, washed with n-hexane and dried to give a solid catalyst component [A].

The same copolymerization of ethylene and 1-butene as in Polymerization—1 of Example 1 was repeated except that the solid catalyst component [A] as obtained above in an amount of 0.002 mmol per titanium atom and 0.15 mmol of triethylaluminum were employed. The results are shown in Table 2.

Table 2

| Example No. | Preparation of Solid Reaction Product (3): Organometallic Compound (a) | (mmol) | Reaction Temperature (°C) | Reaction Time (hour) | Results of Polymerization: Catalyst Activity (Kg/g·Ti) | MI | FR | Density | Bulk Density (g/cm$^3$) |
|---|---|---|---|---|---|---|---|---|---|
| 16 | $Mg(CH_3)(i\text{-}C_3H_7)$ | 10 | 40 | 6 | 610 | 2.6 | 50 | 0.935 | 0.32 |
| 17 | $Al_{0.2}Mg(C_2H_5)_{0.4}(n\text{-}C_5H_{11})_{1.0}[OSi(CH_3)_3]_{1.2}$ | 35 | 50 | 3 | 1100 | 3.5 | 22 | 0.934 | 0.42 |
| 18 | $Al_{0.3}Mg(n\text{-}C_4H_9)_{1.0}(n\text{-}C_8H_{17})_{1.6}(On\text{-}C_4H_9)_{0.3}$ | 15 | 60 | 2 | 980 | 6.2 | 24 | 0.933 | 0.40 |
| 19 | $Al_{0.4}Mg(n\text{-}C_3H_7)_{0.8}(n\text{-}C_4H_9)_{1.5}(On\text{-}C_8H_{17})_{0.9}$ | 60 | -ditto- | -ditto- | 850 | 2.9 | 23 | 0.931 | 0.42 |
| 20 | $Mg(n\text{-}C_6H_{13})_2[O(n\text{-}C_4H_9)_2]_{1.5}$ | 90 | -ditto- | 4 | 620 | 4.1 | 30 | 0.936 | 0.35 |
| 21 | $Al_{0.7}Mg(n\text{-}C_5H_{11})_{0.7}(n\text{-}C_{10}H_{21})_{0.6}(OCH_2C_6H_5)_{2.8}$ | 20 | -10 | -ditto- | 690 | 1.2 | 33 | 0.932 | 0.36 |
| 22 | $ZnMg(C_2H_5)_{1.8}(n\text{-}C_4H_9)_{1.8}[S(n\text{-}C_4H_9)]_{0.4}$ | 2 | 30 | 2 | 310 | 0.6 | 40 | 0.933 | 0.34 |
| 23 | $B_{0.6}Mg(n\text{-}C_4H_9)_{3.1}[N(C_2H_5)_2]_{0.7}$ | 130 | 30 | 2 | 630 | 3.5 | 27 | 0.936 | 0.35 |
| 24 | $Al_{0.01}Mg(C_2H_5)_{0.3}(n\text{-}C_4H_9)_{1.4}(OCH_2CH_2O)_{0.3}$ | 40 | 65 | 1 | 820 | 2.2 | 26 | 0.931 | 0.40 |
| 25 | $Zn_2Mg(C_2H_5)_5(C_2H_5)[N(CH_2CH_2)_3N]_{4.0}$ | 160 | 20 | 5 | 320 | 0.9 | 35 | 0.939 | 0.33 |

Examples 26 to 42

The oxygen and moisture present inside a 250 ml flask equipped with a dropping funnel and a water-cooled reflux condenser were removed by replacement with nitrogen, and to the flask was charged 50 ml of n-octane containing 20 mmols of

$$Al_{0.17}Mg(C_2H_5)_{0.51}(n\text{-}C_4H_9)_{1.2}(OSiH \cdot CH_3 \cdot n\text{-}C_4H_9)_{0.8}$$

in a nitrogen atmosphere. Then 50 ml of n-octane containing the halide (b) as set forth in Table 3 were accurately measured and charged in the dropping funnel and added to the flask at the temperature over the period of time as set forth in Table 3. After completion of the reaction, the solids formed were washed three times with 50 ml of n-heptane by decantation, and then n-heptane was added to the solids to form 150 ml of a suspension. To the suspension were added 0.8 mmol of

$$Al(C_2H_5)(On\text{-}C_6H_{13})Cl,$$

0.3 mmol of $TiCl_4$ and 0.3 mmol of $VOCl_3$ and the reaction was carried out at 90°C for one hour to give a suspension.

In a 1.5 l autoclave having been dehydrated and evacuated were charged the suspension as obtained above in an amount of 0.002 mmol per titanium atom plus vanadium atom and 0.15 mmol of triisobutylaluminum together with 800 ml of dehydrated and deaerated n-hexane. After 30 mmols of hydrogen and 700 mmols of 4-methyl-1-pentene were charged in the autoclave, the internal temperature of the autoclave was raised to 150°C and ethylene was added up to a total gauge pressure of 15 kg/cm$^2$ ($147 \times 10^4$ Pa) and the polymerization was carried out for 30 minutes while the gauge pressure was maintained by supplying additional ethylene to the autoclave. The results are shown in Table 3.

Table 3

| Example No. | Preparation of Solid Reaction Product (3): Halide (b) | (mmol) | Reaction Temperature (°C) | Reaction Time (hour) | Results of Polymerization: Catalyst Activity [Kg/g·(Ti+V)] | MI | FR | Density |
|---|---|---|---|---|---|---|---|---|
| 26 | $BCl_3$ | 15 | 20 | 2 | 443 | 1.3 | 32 | 0.930 |
| 27 | $(n-C_4H_9)BCl_2$ | 30 | 50 | 3 | 490 | 9.2 | -ditto- | 0.933 |
| 28 | $(C_2H_5O)BCl_2$ | 60 | 70 | 0.5 | 526 | 6.4 | 33 | 0.929 |
| 29 | $HSiCl_3$ | 10 | 20 | 9 | 711 | 5.3 | 23 | 0.931 |
| 30 | $(CH_3)SiCl_3$ | 25 | 40 | 3 | 693 | 8.2 | 29 | -ditto- |
| 31 | $(CH_2=CH)SiCl_3$ | 15 | 60 | -ditto- | 748 | 2.6 | 25 | 0.929 |
| 32 | $(n-C_8H_{17})SiH\cdot Cl_2$ | 13 | -ditto- | 6 | 700 | 6.5 | 27 | 0.927 |
| 33 | $(C_6H_5O)_2SiCl_2$ | 49 | 90 | 1 | 687 | 2.2 | 26 | 0.928 |
| 34 | $SiBr_4$ | 14 | -10 | 4 | 292 | 12.7 | 39 | 0.939 |
| 35 | $GeCl_4$ | 11 | 70 | 2 | 515 | 6.5 | 31 | 0.930 |
| 36 | $SnCl_4$ | 28 | 10 | 4 | 456 | 9.9 | 34 | 0.931 |
| 37 | $(CH_3)SbCl_2$ | 180 | 0 | 8 | 280 | 0.2 | 38 | 0.940 |
| 38 | $(C_2H_5)BiCl_2$ | 250 | 50 | 4 | 274 | 13.5 | 32 | 0.941 |
| 39 | $PCl_3$ | 10 | 140 | 3 | 259 | 9.8 | 36 | 0.940 |
| 40 | $HCl$ | 154 | -5 | 2 | 292 | 0.1 | 32 | 0.939 |
| 41 | $SiCl_4$ | 40 | 70 | 2 | 651 | 0.3 | 24 | 0.929 |
| 42 | $(C_2H_5)_2SbCl_3$ | 54 | 110 | 4 | 297 | 21.2 | 39 | 0.942 |

Examples 43 to 47

The oxygen and moisture present inside a 500 ml flask equipped with a dropping funnel and a water-cooled reflux condenser were removed by replacement with nitrogen, and to the flask were charged the solid inorganic oxide as set forth in Table 4 and 200 mmols of a n-hexane solution containing 2 mmols of trichloroethoxysilane and the temperature was raised to 60°C. Then 100 ml of n-hexane containing 3 mmols of

$$Al_{0.01}Mg(n\text{-}C_6H_{13})_{2.03} \cdot [O(i\text{-}C_5H_{11})_2]_{0.5}$$

was added dropwise from the dropping funnel to the flask at 60°C over one hour. The solids were separated by filtration and suspended in 400 ml of n-hexane to form a suspension. Then to the suspension were added dropwise 1 mmol of $TiCl_3(On\text{-}C_4H_9)$ and 4 mmols of

$$Al(C_2H_5)_2[OSi(C_6H_5)_3]$$

and the reaction was carried out at 30°C for 3 hours. The solids formed were separated from the reaction mixture solution by filtration and dried to give a solid catalyst component [A].

The same gas phase copolymerization of ethylene and 1-butene as in Polymerization—3 of Example 1 were repeated except that the solid catalyst component [A] as obtained above in an amount of 0.1 mmol per titanium atom and 20 mmols of

$$Al(n\text{-}C_8H_{17})_{2.6}(OC_2H_5)_{0.4}$$

were employed. The results are shown in Table 4.

Table 4

| Example No. | Solid Inorganic Oxide (c) (g) | | Catalyst Activity (Kg/g·Ti) | Results of Polymerization MI | FR | Density | Bulk Density ($g/cm^3$) | Particle Size |
|---|---|---|---|---|---|---|---|---|
| 43 | Silica (Product of Fuji-Davison Chemical Ltd.; Grade 952) | 10 | 452 | 3.5 | 29 | 0.929 | 0.41 | More than 65% by weight of polymer powder had a particle size of 35 to 48 mesh. |
| 44 | Silica (Product of Fuji-Davison Chemical Ltd.; Grade 3A) | 20 | 379 | 2.9 | 27 | 0.927 | 0.42 | More than 60% by weight of polymer powder had a particle size of 20 to 28 mesh. |
| 45 | Silica by high Temperature method (Product of Cabot Corporation "CAB-O-SIL") | 5 | 365 | 6.4 | 26 | -ditto- | 0.39 | More than 75% by weight of polymer powder had a particle size of 145 to 200 mesh. |
| 46 | Silica-alumina (Product of Fuji-Davison Chemical Ltd.; Grade 135) | 4 | 398 | 0.37 | 33 | 0.931 | 0.41 | More than 80% by weight of polymer powder had a particle size of 48 to 100 mesh. |
| 47 | Magnesium oxide (Product of Kyowa Chemical Industry Co.,Ltd.; "KYOWA Mag 150") | 2 | 324 | 0.21 | 42 | 0.927 | 0.35 | More than 50% by weight of polymer powder had a particle size of 148 to 200 mesh. |

Examples 48 to 53

The oxygen and moisture present inside a 500 ml flask equipped with a dropping funnel and a water-cooled reflux condenser were removed by replacement with nitrogen and to the flask was charged 50 ml of n-hexane containing 50 mmol of

$$Li_{0.08}Mg(C_2H_5)_{0.5}(n\text{-}C_4H_9)_{0.58}(On\text{-}C_4H_9)_{1.0}$$

in a nitrogen atmosphere and the temperature was raised to 40°C. Then 50 ml of a n-hexane solution containing 20 mmols of trichlorosilane and 10 mmols of tetrachlorogermane was accurately measured and charged in the dropping funnel, and then was added dropwise to the flask at 40°C with stirring over one hour. Then to the reaction solution was added 100 ml of a n-hexane solution containing the electron donative organic compound (d) as set forth in Table 5, and the reaction was carried out for two hours by refluxing under heating. The reaction mixture solution was cooled to room temperature, washed with n-hexane by decantation and then n-hexane was added to the reaction product to form 200 ml of a suspension. To the suspension were added 10 mmols of titanium tetrachloride and 20 mmols of diethylaluminum chloride, and the reaction was carried out at 60°C for four hours. Then n-hexane was added to the reaction mixture solution to form 350 ml of a suspension and the pre-polymerization of ethylene was conducted by introducing ethylene into the suspension until the amount of polyethylene as set forth in Table 5 was obtained. Subsequently solids were separated from the suspension.

In a 1.5 l autoclave were charged the solids as obtained above in an amount of 0.002 mmol per titanium atom and 0.1 mmol of triisobutylaluminum together with 800 ml of dehydrated and deaerated isobutane, and then the α-olefin as set forth in Table 5 was charged in the autoclave. The internal temperature of the autoclave was raised to 80°C and hydrogen was added up to 9.5 Kg/cm$^2$ (93.1$\times10^4$ Pa) and then ethylene was added up to a gauge pressure of 11.5 Kg/cm$^2$ (112.7$\times10^4$ Pa). The polymerization was carried out for one hour while the gauge pressure was maintained by supplying additional ethylene to the autoclave. The results are shown in Table 5.

Table 5

| Example No. | Electron Donative Organic Compound (d) (mmol) | Ethylene Pre-polymerization (g) | α-Olefin (mmol) | Results of Polymerization | | | | |
|---|---|---|---|---|---|---|---|---|
| | | | | Catalyst Activity (Kg/g·Ti) | MI | FR | Density | Bulk Density (g/cm$^3$) |
| 48 | Ethyl benzoate 25 | 2 | -- | 830 | 0.4 | 25 | 0.968 | 0.43 |
| 49 | Ethyl benzoate 100 | 9 | 1-Hexene 200 | 613 | 6.7 | 23 | 0.922 | 0.38 |
| 50 | Ethyl p-toluate 60 | 20 | 1-Octene 180 | 597 | 4.2 | 21 | 0.925 | 0.39 |
| 51 | Diisoamyl ether 300 | 4 | 3-Methyl-1-butene 50 | 411 | 0.9 | 29 | 0.944 | 0.41 |
| 52 | Diisoamyl ether 250 | 14 | 1-Decene 100 | 490 | 2.3 | 26 | 0.939 | 0.40 |
| 53 | Hexamethylphosphoramide 10 | 6 | Propylene 30 | 370 | 1.9 | 39 | 0.947 | 0.41 |

Example 54

In a 1 l autoclave having been dehydrated and evacuated were charged the same solid catalyst component [A] as prepared in Example 1 in an amount of 0.001 mmol per titanium atom and 0.03 mmol of trioctylaluminum together with 0.5 l of dehydrated and deaerated n-hexane. After 5 mmols of hydrogen was added to the autoclave, ethylene was added up to a gauge pressure of 50 Kg/cm$^2$ (490×10$^4$ Pa) and the internal temperature of the autoclave was raised to 270°C and the polymerization of ethylene was carried out for 6 minutes. As a result, there was obtained 42 g of a polymer having a MI of 0.9 and a FR of 31.

Comparative Example 1

The oxygen and moisture present inside a 250 ml flask equipped with a dropping funnel and a water-cooled reflux condenser were removed by replacement with nitrogen, and to the flask was charged 100 ml of a n-hexane solution containing titanium tetrachloride in an amount of 0.5 mol per liter of n-hexane in a nitrogen atmosphere. Then 114 mmols of diethylaluminum chloride was accurately measured, charged in the dropping funnel and added dropwise to the flask at 20°C with stirring over one hour. After the temperature was raised to 60°C, the reaction was continued further for three hours. The solids formed were separated from the reaction mixture solution by filtration, washed with n-hexane and dried. The solids thus obtained contained 28% by weight of titanium.

The same copolymerization of ethylene and 1-octene as in Polymerization—2 of Example 1 was repeated except that 40 mg of the solid catalyst component as obtained above and 0.8 mmol of triisobutylaluminum were employed. As a result, 104 g of a polymer was obtained and the catalyst activity was 9.3 Kg/g · Ti. The polymer showed a MI of 17.5, a FR of 42 and a density of 0.935.

Examples 55 to 59

In a 1.5 l autoclave having been dehydrated and evacuated were charged the same solid catalyst component [A] as prepared in Example 1 in an amount of 0.003 mmol per titanium atom and the organometallic component [B] as set forth in Table 6 together with 800 ml of dehydrated and deaerated n-octane. Then 2 mmols of hydrogen was added to the autoclave and the internal temperature of the autoclave was raised to 230°C and ethylene was added up to a total gauge pressure of 36 Kg/cm$^2$ (353×10$^4$ Pa). The polymerization of ethylene was carried out for 20 minutes while the total gauge pressure of 36 Kg/cm$^2$ (353×10$^4$ Pa) was maintained by supplying additional ethylene to the autoclave. The results are shown in Table 6.

Table 6

| Example No. | Organometallic Component [B] (mmol) | | Results of Polymerization: Catalyst Activity (Kg/g·Ti) | MI | FR |
|---|---|---|---|---|---|
| 55 | $Al(n-C_{10}H_{21})_3$ | 0.06 | 387 | 2.3 | 22 |
| 56 | $Al(C_2H_5)_2Cl$ | 0.09 | 359 | 1.9 | 26 |
| 57 | $AlMg(C_2H_5)_3(n-C_4H_9)_3$ | 1.8 | 216 | 7.2 | 29 |
| 58 | $Al(C_2H_5)_{2.6}(On-C_4H_9)_{0.4}$ | 0.25 | 288 | 8.9 | 30 |
| 59 | $Al(n-C_8H_{17})_{2.8}Cl_{0.2}$ | 0.03 | 407 | 0.9 | 29 |

Example 60

(I) Synthesis of organomagnesium compound (a)

In a 200 ml flask purged with nitrogen was charged 5 g of magnesium powder, and then 30 ml of n-octane containing 2 mmols of butoxyaluminum dichloride, and the temperature was raised to 100°C. Subsequently to the flask were added dropwise 100 mmols of n-butyl chloride and 70 ml of n-octane containing 100 mmols of ethyl bromide with stirring at 100°C for 2 hours. After completion of the dropwise addition, the reaction mixture was stirred further for one hour. The solids formed were separated by filtration and the filtrate was subjected to analysis. 80 ml of this filtrate was accurately measured and charged in a 200 ml flask purged with nitrogen and 35.4 mmols of n-butyl. As a result, the composition of the filtrate was found to have

$$Al_{0.02}Mg(C_2H_5)_{1.02}(n\text{-}C_4H_9)_{1.02}(On\text{-}C_4H_9)_{1.02}$$

and the concentration of this compound was 0.87 mol per liter of the reaction solvent.

(II) Synthesis of solid catalyst component [A]

The oxygen and moisture present inside a 250 ml flask equipped with a dropping funnel and a water-cooled reflux condenser were removed by replacement with nitrogen, and to the flask were charged 25 ml of a n-heptane solution containing trichlorosilane in an amount of one mol per liter of n-heptane and 25 ml of n-heptane in a nitrogen atmosphere, and the temperature was raised to 70°C. Then 25 ml of the organomagnesium compound (a) as obtained above and 25 ml of n-heptane were accurately measured and charged in the dropping funnel, and then were added dropwise to the flask at 70°C with stirring over 2 hours, resulting in a white suspension reaction solution. The suspension reaction solution was cooled to room temperature, left to stand, and the supernatant liquid was removed by decantation. The reaction product obtained was washed twice with 50 ml of n-heptane, and then n-heptane was added to the reaction product to adjust the amount of the liquid to 100 ml. To this suspension were added 0.53 mmol of tetrabutoxytitanium, 1.06 mmols of tetrabutoxyzirconium and 10.5 mmols of ethylaluminum dichloride, and the reaction was carried out at 60°C for two hours. After completion of the reaction, the solids formed were separated from the reaction mixture solution by filtration, washed with n-heptane and dried. The solid catalyst component [A] thus obtained contained 1.1% by weight of titanium and 4.2% by weight of zirconium.

(III) Polymerization—1

In a 1.5 l autoclave having been dehydrated and evacuated were charged 20 mg of the solid catalyst component [A] as prepared in (II) and 0.25 mmol of triisobutylaluminum together with 800 ml of dehydrated and deaerated n-hexane, and then the internal temperature of the autoclave was raised to 80°C. Then hydrogen was added up to 9.6 $Kg/cm^2$ ($94\times10^4$ Pa) and subsequently ethylene was added up to a total gauge pressure of 20 $Kg/cm^2$ ($196\times10^4$ Pa). The polymerization was carried out for one hour while the total gauge pressure of 20 $Kg/cm^2$ ($196\times10^4$ Pa) was maintained by supplying additional ethylene to the autoclave. As a result, there was obtained 109 g of polymer powder, and the catalyst activity was 103 Kg/g · (Ti+Zr). The polymer powder obtained showed a MI of 0.21, a FR of 83 and a bulk density of 0.37 $g/cm^3$, and more than 65% by weight of the polymer powder had a particle size of 105 μm to 149 μm.

Polymerization—2

In a 1.5 l autoclave having been dehydrated and evacuated were charged 20 mg of the solid catalyst component [A] as prepared in (II) and 0.1 mmol of triethylaluminum together with 800 ml of dehydrated and deaerated cyclohexane. After 25 mmols of hydrogen and 800 mmols of 1-octane were charged in the autoclave, the internal temperature of the autoclave was raised to 160°C and ethylene was added up to a total gauge pressure of 33 $Kg/cm^2$ ($323\times10^4$ Pa). The polymerization was carried out for 20 minutes while the total gauge pressure of 33 $Kg/cm^2$ ($323\times10^4$ Pa) was maintained by supplying additional ethylene to the autoclave. As a result, there was obtained 40 g of a polymer, and the catalyst activity was 235 Kg/g · (Ti+Zr). The polymer obtained showed a MI of 0.89, a FR of 58 and a density of 0.927.

Polymerization—3

Gas phase polymerization was conducted using a 50 l stainless steel autoclave of fluidized bed type. In the autoclave whose temperature had been adjusted to 80°C were charged 100 mg of the solid catalyst component [A] as prepared in (II) and 20 mmols of triethylaluminum, and the polymerization was conducted by introducing a mixed gas consisting of ethylene and hydrogen at a mol ratio of 1:0.20 into the autoclave at a rate of 15 cm/second for one hour at a gauge pressure of 20 $Kg/cm^2$ ($196\times10^4$ Pa). As a result, there was obtained 1100 g of polymer powder having a bulk density of 0.37 $g/cm^3$. The catalyst activity was 207 Kg/g · (Ti+Zr) and the polymer powder showed a MI of 0.32 and a FR of 71.

Examples 61 to 69

The oxygen and moisture present inside a 250 ml flask equipped with a dropping funnel and a water-cooled reflux condenser were removed by replacement with nitrogen, and to the flask was charged 50 ml of n-heptane containing 30 mmols of trichlorosilane in a nitrogen atmosphere, and the temperature was raised to 60°C. Then 50 ml of n-heptane containing 25 mmols of

$$Al_{0.1}Mg(C_2H_5)_{1.7}(n\text{-}C_8H_{17})_{0.5}(On\text{-}C_4H_9)_{0.1}$$

was accurately measured, charged in the dropping funnel and added dropwise to the flask at 60°C with stirring over one hour, resulting in a white suspension reaction solution. The suspension reaction solution was cooled to room temperature, left to stand, and the supernatant liquid was removed by decantation. The reaction product obtained was washed three times with 50 ml of n-heptane, and then n-heptane was added to the reaction product to form 100 ml of a suspension. To the suspension were added the organometallic compounds (1) and the transition metal compounds (2) as set forth in Table 7 and the reaction was carried out at 60°C for four hours. The reaction mixture solution was left to stand, and the supernatant liquid was removed and then n-heptane was newly added to the reaction product to form a suspension which was employed as the solid catalyst component [A] in the polymerization.

The same polymerization of ethylene as in Polymerization—2 of Example 60 was repeated except that the solid catalyst component [A] as obtained above in an amount of 0.02 mmol per titanium atom plus zirconium atom, the organometallic component [B] and the halogenated hydrocarbon [C] as set forth in Table 8 were employed. The results are shown in Table 8.

Table 7

| Example No. | Organometallic Compound (1) (mmol) | Transition Metal Compound (2): Titanium Compound (i) (mmol) | Transition Metal Compound (2): Zirconium Compound (ii) (mmol) | Order of Addition: 1 | Order of Addition: 2 | Order of Addition: 3 |
|---|---|---|---|---|---|---|
| 61 | $Al(C_2H_5)Cl_2$ 1.20 | $Ti(On-C_4H_9)_4$ 0.265 | $Zr(On-C_4H_9)_4$ 0.530 | (2)-(ii) | (2)-(i) | (1) |
| 62 | $Al(C_2H_5)Cl_2$ 36.3 | $Ti(On-C_4H_9)_4$ 0.910 | $Zr(On-C_4H_9)_4$ 3.63 | (2)-(i) | (2)-(ii) | (1) |
| 63 | $Al(i-C_4H_9)Cl_2$ 7.72 | $Ti(Oi-C_3H_7)_4$ 0.241 | $Zr(On-C_4H_9)_4$ 1.68 | (2)-(i) | (2)-(ii) | (1) |
| 64 | $Al(C_2H_5)_{1.5}Cl_{1.5}$ 16.0 | $Ti(On-C_4H_9)_4$ 1.14 | $Zr(On-C_4H_9)_4$ 1.14 | (1) | (2)-(ii) | (2)-(i) |
| 65 | $Al(C_2H_5)Cl_2$ 42.2 | $Ti(On-C_4H_9)_3Cl$ 4.69 | $Zr(Oi-C_3H_7)_4$ 2.35 | (2)-(i) | (1) | (2)-(ii) |
| 66 | $Al(C_2H_5)Cl_2$ 42.1 | $Ti(On-C_4H_9)_4$ 1.75 | $Zr(On-C_4H_9)_4$ 5.28 | (2)-(ii) | (2)-(i) | (1) |
| 67 | -ditto- | -ditto- | -ditto- | | -ditto- | |
| 68 | -ditto- | -ditto- | -ditto- | | -ditto- | |
| 69 | -ditto- | -ditto- | -ditto- | | -ditto- | |

Table 8

| Example No. | Organometallic Component [B] (mmol) | Halogenated Hydrocarbon [C] (mmol) | Results of Polymerization: Catalyst Activity [Kg/g·(Ti+Zr)] | MI | FR | Bulk Density (g/cm³) |
|---|---|---|---|---|---|---|
| 61 | $Al(i-C_4H_9)_3$ 0.2 | --- | 232 | 0.25 | 73 | 0.37 |
| 62 | $Al(i-C_4H_9)_3$ 0.4 | $CH_2Cl_2$ 0.4 | 87 | 0.08 | 115 | 0.36 |
| 63 | Al isoprenyl 0.8 | --- | 89 | 0.36 | 65 | 0.35 |
| 64 | $Al(n-C_8H_{17})_3$ 0.6 | --- | 275 | 0.75 | 72 | 0.36 |
| 65 | $Al(C_2H_5)_{2.5}Cl_{0.5}$ 2.0 | --- | 19 | 0.32 | 45 | 0.21 |
| 66 | $Al(C_2H_5)_3$ 0.4 | --- | 264 | 0.69 | 71 | 0.37 |
| 67 | $Al(i-C_4H_9)_3$ 0.4 | $ClCH_2(CHCl)_2CH_2Cl$ 0.1 | 189 | 0.31 | 96 | -ditto- |
| 68 | $Al(i-C_4H_9)_3$ 0.6 | $ClCH_2CH_2Cl$ 0.3 | 166 | 0.27 | 89 | -ditto- |
| 69 | $(i-C_4H_9)_2Al_2O$ 0.2 | --- | 198 | 0.44 | 68 | 0.38 |

Example 70

The oxygen and moisture present inside a 250 ml flask equipped with two dropping funnels and a water-cooled reflux condenser were removed by replacement with nitrogen, and to the flask was charged 40 ml of n-hexane in a nitrogen atmosphere. Then 30 ml of n-hexane containing 35 mmols of

$$Al_{0.2}Mg(C_2H_5)_{0.4}(n\text{-}C_4H_{11})_{1.0}[OSi(CH_3)_3]_{1.2}$$

and 30 ml of n-hexane containing 30 mmols of methyldichlorosilane were accurately measured and charged in the dropping funnels, respectively. After the internal temperature of the flask was raised to 60°C, the both in the dropping funnels were simultaneously added dropwise to the flask with stirring to carry out the reaction for two hours. After completion of the reaction, the solids formed were washed with n-hexane by decantation, and n-hexane was added to the solids to form 200 ml of a suspension. To the suspension were added 1.22 mmols of tetrabutoxyzirconium and 11.6 mmols of ethylaluminum dichloride, and the reaction was carried out at 65°C for three hours. Then to the reaction mixture solution was added 0.24 mmol of titanium tetrachloride and the reaction was continued at 65°C further for one hour. The solids formed were separated from the reaction mixture solution by filtration, washed with n-hexane and dried to give a solid catalyst component [A].

The same polymerization of ethylene as in Polymerization—1 of Example 60 was repeated except that the solid catalyst component [A] as obtained above in an amount of 0.02 mmol per titanium atom plus zirconium atom and 0.5 mmol of trioctylaluminum were employed. As a result, the catalyst activity was 102 Kg/g · (Ti+Zr) and the polymer obtained showed a MI of 0.12, a FR of 68 and a bulk density of 0.37.

Example 71

The reaction between 15 mmols of

$$Al_{0.3}Mg(n\text{-}C_4H_9)_{1.0}(n\text{-}C_8H_{17})_{1.6}(On\text{-}C_4H_9)_{0.6}$$

and 30 mmols of tetrachlorosilane was carried out under the same reaction conditions as in Example 70. Then to the suspension obtained were added 0.1 mmol of titanium tetrachloride and 0.1 mmol of ethylaluminum dichloride and the reaction was carried out at 50°C for one hour. Then to the reaction mixture solution were added 0.3 mmol of tetrabutoxyzirconium and 3 mmols of ethylaluminum dichloride and the reaction was continued at 50°C further for two hours. The solids formed were separated from the reaction mixture solution by filtration and dried to give a solid catalyst component [A].

The same polymerization of ethylene as in Polymerization—1 of Example 60 was repeated except that the solid catalyst component [A] as obtained above in an amount of 0.02 mmol per titanium atom plus zirconium atom and 0.5 mmol of trioctylaluminum were employed. As a result, the catalyst activity was 175 Kg/g · (Ti+Zr) and the polymer obtained showed a MI of 0.36, a FR of 66 and a bulk density of 0.37 g/cm$^3$.

Example 72

The same procedures for the preparation of the solid catalyst component [A] as in Example 70 were repeated except that 90 mmols of

$$Mg(n\text{-}C_6H_{13})_2[O(n\text{-}C_4H_9)_2]_{1.5},$$

50 mmols of tin tetrachloride, 11.3 mmols of titanium tetrachloride, 11.3 mmols of zirconium tetrachloride dissolved in dibutyl ether and 30 mmols of triisobutylaluminum were employed.

The polymerization of ethylene alone was conducted under the same polymerization conditions as in Polymerization—2 of Example 60 except that the solid catalyst component [A] as obtained above in an amount of 0.01 mmol per titanium atom plus zirconium atom, 0.8 mmol of triethylaluminum and 50 mmols of hydrogen were employed. As a result, the catalyst activity was 86 Kg/g · (Ti+Zr) and the polymer obtained showed a MI of 0.12 and a FR of 59.

Example 73

The same procedures for the preparation of the solid catalyst component [A] as in Example 70 were repeated except that 20 mmols of

$$B_{0.6}Mg(n\text{-}C_4H_9)_{3.1}[N(C_2H_5)_2]_{0.7},$$

80 mmols of germanium tetrachloride, 2.25 mmols of titanium tetrachloride, 1.5 mmols of zirconium tetrachloride dissolved in n-butanol and 11.3 mmols of trioctylaluminum were employed.

The same copolymerization of ethylene and 1-octene as Polymerization—2 of Example 60 was repeated except that the solid catalyst component [A] as obtained above in an amount of 0.02 mmol per titanium atom plus zirconium atom was employed. As a result, the catalyst activity was 79 Kg/g · (Ti+Zr) and the polymer obtained showed a MI of 0.43, a FR of 56 and a density of 0.931.

Example 74

The same procedures for the preparation of the solid catalyst component [A] as in Example 70 were repeated except that 30 mmols of

$$Li_{0.05}Mg(C_2H_5)_{1.05}(n\text{-}C_3H_7)_{1.0},$$

40 mmols of boron trichloride, 0.42 mmol of tetrabutoxytitanium 2.52 mmols of zirconium tetrachloride dissolved in dibutyl ether and 29.4 mmols of ethylaluminum sesquichloride were employed.

The same polymerization of ethylene as in Polymerization—1 of Example 60 was repeated except that the solid catalyst component [A] as obtained above in an amount of 0.02 mol per titanium atom plus zirconium atom was employed. As a result, the catalyst activity was 89 Kg/g · (Ti+Zr) and the polymer obtained showed a MI of 0.32, a FR of 76 and a bulk density of 0.32 g/cm$^3$.

Example 75

The reaction between 30 mmols of

$$Al_{0.02}Mg(C_2H_5)_{1.0}(n\text{-}C_4H_9)_{1.0}(OCH_2CH_2O)_{0.03}$$

and 35 mmols of trichlorosilane was carried out under the same reaction conditions as in Example 70. Then to the suspension thus obtained were added 1.32 mmols of tetrabutoxyzirconium and 13.5 mmols of ethylaluminum dichloride and the reaction was carried out at 65°C for two hours. After the supernatant liquid was removed from the reaction mixture solution by decantation, n-hexane was added thereto in the same amount as that of the supernatant liquid removed. Then to the mixture solution were added 0.44 mmol of titanium tetrachloride and 0.45 mmol of diethylaluminum ethoxide and the reaction was carried out at 40°C for one hour. The solids formed were separated from the reaction mixture solution by filtration and dried to give a solid catalyst component [A].

The same polymerization of ethylene as in Polymerization—1 of Example 60 was repeated except that the solid reaction catalyst component [A] as obtained above in an amount of 0.02 mmol per titanium atom plus zirconium atom was employed. As a result, the catalyst activity was 186 Kg/g · (Ti+Zr) and the polymer obtained showed a MI of 0.22, a FR of 85 and a bulk density of 0.39 g/cm$^3$.

Examples 76 to 78

The oxygen and moisture present inside a 500 ml flask equipped with a dropping funnel and a water-cooled reflux condenser were removed by replacement with nitrogen, and to the flask were charged the solid inorganic oxide as set forth in Table 9 and 200 mmols of n-decane containing 2 mmols of trichlorovinylsilane and the temperature was raised to 60°C. Then 100 ml of n-decane containing 3 mmols of

$$Al_{0.01}Mg(C_6H_{13})_{2.03}[O(i\text{-}C_5H_{11})_2]_{0.5}$$

was added dropwise from the dropping funnel to the flask at 60°C over one hour. The solids were separated by filtration and suspended in 200 ml of n-decane to form a suspension. Then to the suspension were added dropwise 0.05 mmol of tetrabutoxytitanium, 0.15 mmol of tetrabutoxyzirconium and 1.0 mmol of ethylaluminum dichloride and the reaction was carried out at 150°C for 3 hours. The solids formed were separated from the reaction mixture solution by filtration and dried to give a solid catalyst component [A].

The same gas phase polymerization of ethylene as in Polymerization—3 of Example 60 were repeated except that the solid catalyst component [A] as obtained above in an amount of 0.1 mmol per titanium atom plus zirconium atom and 20 mmols of trioctylaluminum were employed. The results are shown in Table 9.

Table 9

| Example No. | Solid Inorganic Oxide (c)* (g) | | Catalyst Activity [Kg/g·(Ti+Zr)] | Results of Polymerization MI | FR | Bulk Density ($g/cm^3$) | Particle Size |
|---|---|---|---|---|---|---|---|
| 76 | Silica (Product of Fuji-Davison Chemical Ltd.; Grade 952) | 7 | 165 | 0.45 | 65 | 0.37 | More than 75% by weight of polymer powder had a particle size of 35 to 48 mesh. |
| 77 | Gamma-alumina (Product of Sumitomo Chemical Co., Ltd.; Grade A-11) | 15 | 110 | 0.01 | 82 | 0.38 | More than 70% by weight of polymer powder had a particle size of 100 to 200 mesh. |
| 78 | Magnesium oxide (Product of Kyowa Chemical Co., Ltd.; "KYOWA MAG 150") | 5 | 109 | 0.12 | 71 | 0.36 | More than 50% by weight of polymer powder had a particle size of 145 to 200 mesh. |

* Solid inorganic oxide was dried at 700°C for 5 hours in a nitrogen atmosphere prior to use.

Example 79

The oxygen and moisture present inside a 500 ml flask equipped with a dropping funnel and a water-cooled reflux condenser were removed by replacement with nitrogen and to the flask was charged 50 ml of n-hexane containing 40 mmols of

$$Al_{0.15}Mg(C_2H_5)_{1.0}(n\text{-}C_4H_9)_{1.0}(n\text{-}C_{10}H_{21})_{0.45}$$

in a nitrogen atmosphere and the temperature was raised to 40°C. Then 50 ml of n-hexane containing 60 mmols of trichlorosilane was accurately measured and charged in the dropping funnel and added dropwise to the flask at 40°C with stirring over one hour. Then to the reaction solution was added 100 ml of n-hexane containing 3 mmols of ethyl benzoate, and the reaction was carried out for two hours by refluxing under heating. The reaction mixture solution was cooled to room temperature, washed with n-hexane by decantation and then n-hexane was added to the reaction product to form 200 ml of a suspension. To the suspension were added 1.60 mmols of tetrabutoxyzirconium and 6.5 mmols of dibutylaluminum dichloride, and the reaction was carried out at 60°C for four hours. Then 0.5 mmol of titanium tetrachloride was added to the reaction mixture solution and the reaction was carried out at 60°C for two hours. Then n-hexane was added to the reaction mixture solution to form 350 ml of a suspension and the pre-polymerization of 0.7 mol of ethylene was conducted by introducing ethylene containing 5 mol % of hydrogen into the suspension. Subsequently solids were separated from the suspension.

In a 50 l stainless steel autoclave of fluidized bed were charged the solids as obtained above in an amount of 0.1 mmol per titanium atom plus zirconium atom and 10 mmols of triethylaluminum, and the same polymerization as in Polymerization—3 of Example 60 was repeated except that a mixed gas consisting of ethylene, 1-butene and hydrogen at a mol ratio of 1:0.3:0.1 was employed. As a result, there was obtained polymer powder having a bulk density of 0.35 g/cm$^3$ and the catalyst activity was 186 Kg/g · (Ti+Zr). The polymer powder showed a MI of 3.5, a FR of 62 and a density of 0.9222.

**Claims**

1. A catalyst useful for polymerizing olefins, which comprises a solid catalyst component [A] and an organometallic component [B], the component [A] being derived from a transition metal compound selected from a titanium compound, a vanadium compound, a mixture of a titanium compound and a vanadium compound and a mixture of a titanium compound and a zirconium compound, and a solid reaction product of (a) an organomagnesium compound soluble in a hydrocarbon solvent and having the formula

$$M_\alpha MgR_pX_q$$

wherein

α, p, and q each independently is 0 or a number greater than 0,

$p+q=m\alpha+2$,

$0\leqq q/(\alpha+1)<2$,

m is the valence of M,

M is a metal of the 1st to 3rd groups of the Periodic Table,

R is at least one hydrocarbon group having 1 to 20 carbon atoms, and

X is at least one hydrogen atom or electronegative group containing an oxygen atom, a nitrogen atom or a sulfur atom, with (b) at least one compound selected from halides of boron, silicon, germanium, tin, phosphorus, antimony, bismuth and zinc and hydrogen chloride, the reaction being conducted in a hydrocarbon solvent, characterised in that component [A] is obtained by reacting (1) an organometallic compound with (2) the transition metal compound in the presence of (3) the solid reaction product, and in that the solid reaction product (3) is washed with a hydrocarbon solvent by decantation or filtration prior to its use in the reaction of the organometallic compound (1) and the transition metal compound (2), and in that when the transition metal compound (2) is a titanium compound or a vanadium compound or a mixture of a titanium compound and a vanadium compound, the mol ratio of the titanium and/or vanadium compound to the magnesium atom in the solid reaction product (3) is 0.005—5:1 and the mol ratio of the organometallic compound (1) to the titanium and/or vanadium compound is 0.05—20:1, and when the transition metal compound (2) is a mixture of a titanium compound and a zirconium compound the mol ratio of the titanium compound and the zirconium compound to the magnesium atom in the solid reaction product (3) is 0.001—0.35:1, and the mol ratio of the organometallic compound (1) to the titanium and zirconium compound is 0.1—100:1.

2. A catalyst according to Claim 1, characterised in that the organomagnesium compound (a) has the formula

$$M_\alpha MgR_pX_qD_r$$

wherein, M, α, p and q have the meanings as hereinbefore defined, D is an electron donative organic compound, and r is a number greater than 0.

3. A catalyst according to Claim 2, wherein D is an ether, a siloxane, an amine or an ester of an organic acid.

4. A catalyst according to Claim 2 or 3, wherein r in the organomagnesium compound (a) of the solid reaction product (3) is $0 \leqq r \leqq 10$.

5. A catalyst according to claim 4, wherein r in the organomagnesium compound (a) of the solid reaction product (3) is $0 \leqq r \leqq 2$.

6. A catalyst according to any preceding claim, characterised in that the solid reaction product (3) is a reaction product of the organomagnesium compound (a), the compound (b) and a solid inorganic oxide (c).

7. A catalyst according to Claim 6, wherein the solid inorganic oxide (c) is at least one compound selected from silica, alumina, silica-alumina, magnesia, thoria and zirconia.

8. A catalyst according to Claim 6 or 7, wherein the amount of the organomagnesium compound (a) is 0.05 mmol to 100 mmols per gram of the solid inorganic oxide (c).

9. A catalyst according to any one of Claims 1 to 5, characterised in that the solid reaction product (3) is a reaction product of the compounds (a) and (b) or (a), (b) and (c) with an electron donative organic compound (d).

10. A catalyst according to Claim 9, wherein the electron donative organic compound (d) is an ether, a siloxane, an amine or an ester of an organic acid.

11. A catalyst according to Claim 9 or 10, wherein the mol ratio of the electron donative organic compound (d) to the magnesium atom in the solid reaction product (3) is 0.01—100:1.

12. A catalyst according to any preceding claim, characterised in that the organometallic compound (1) is reacted with the transition metal compound in the presence of a solid reaction product (3) which has been separated from a reaction solution for producing it.

13. A catalyst according to any preceding claim, characterised in that M in the organomagnesium compound (a) of the solid reaction product (3) is lithium, beryllium, boron, aluminium or zinc metal.

14. A catalyst according to any preceding claim, characterised in that $\alpha$ in the organomagnesium compound (a) of the solid reaction product (3) is less than or equal to 1.

15. A catalyst according to Claim 14, characterised in that $\alpha$ in the organomagnesium compound (a) of the solid reaction product (3) is 0.01 to 0.5.

16. A catalyst according to any preceding claim, wherein X in the organomagnesium compound (a) of the solid reaction product (3) is $OR^1$, $OSiR^2R^3R^4$, $NR^5R^6$, $SR^7$ or

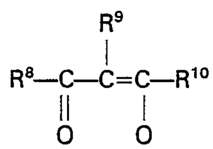

wherein $R^1$, $R^7$, $R^8$ and $R^{10}$ each independently is hydrocarbon group having 1 to 20 carbon atoms and $R^2$, $R^3$, $R^4$, $R^5$, $R^6$ and $R^9$ each independently is a hydrogen atom or a hydrocarbon group having 1 to 20 carbon atoms.

17. A catalyst according to any preceding claim, wherein q in the organomagnesium compound (a) of the solid reaction product (3) is $0 \leqq q/(\alpha+1) \leqq 1.5$.

18. A catalyst according to any preceding claim, wherein the organometallic compound (1) is an organolithium compound, an organomagnesium compound, an organoaluminium compound or an organozinc compound.

19. A catalyst according to claim 18, wherein the organometallic compound (1) is an alkylaluminium containing a halogen atom or an electronegative group.

20. A catalyst according to any preceding claim, wherein the transition metal compound (2) is a titanium or vanadium compound having at least one halogen atom, or a mixture thereof.

21. A catalyst according to claim 20, wherein the atomic ratio of vanadium to titanium in the mixture is 0.02—50:1.

22. A catalyst according to any one of Claims 1 to 19, wherein the transition metal compound (2) is a mixture of a titanium compound and a zirconium compound having at least three alkoxy groups.

23. A catalyst according to Claim 22, wherein the atomic ratio of zirconium to titanium is 0.2—10:1.

24. A catalyst according to any preceding claim, wherein the reaction between the organomagnesium compound (a) and the compound (b) is conducted at a temperature of −50°C to 150°C.

25. A catalyst according to any preceding claim, wherein the mol ratio of the compound (b) to the organomagnesium compound (a) is 0.01—100:1.

26. A catalyst according to any preceding claim, wherein the organometallic component [B] is at least one of an organoaluminium compound, an organozinc compound and an organomagnesium compound.

27. A catalyst according to Claim 28, wherein the organoaluminium compound is a trialkylaluminium, and alkylaluminium hydride, an alkylaluminium halide, an alkylaluminium alkoxide, an alkylaluminium siloxide or a reaction product of a trialkylaluminium and a conjugated diene.

28. A catalyst according to any preceding claim, wherein the mol ratio of the organometallic component [B] to the transition metal in the solid catalyst component [A] is 3—1000:1.

29. A catalyst according to any preceding claim, which comprises the catalyst component [A], the organometallic component [B] and a halogenated hydrocarbon [C].

30. A catalyst according to Claim 29, wherein the mol ratio of the halogenated hydrocarbon [C] to the organometallic component [B] is 0.01—100:1.

31. A process for polymerizing an olefin which comprises contacting the olefin with a catalyst as claimed in any one of Claims 1 to 30.

32. A process according to Claim 31, wherein the olefin is ethylene or a mixture of ethylene and at least one of propylene, 1-butene, 1-pentene, 1-hexene, 1-heptene, 1-octene, 1-nonene, 1-decene, 1-dodecene, 1-tetradecene, and 1-methyl-1-pentene.

**Patentansprüche**

1. Zur Polymerisation von Olefinen geeigneter Katalysator, enthaltend eine feste Katalysatorkomponente (A) und eine Organometallkomponente (B), wobei die Komponente (A) von einer Übergangsmetallverbindung, ausgewählt unter einer Titanverbindung, einer Vanadiumverbindung, einem Gemisch aus einer Titanverbindung und einer Vanadiumverbindung und einem Gemisch aus einer Titanverbindung und einer Zirkoniumverbindung, und einem festen Reaktionsprodukt von (a) einer Organomagnesiumverbindung, die in einem Kohlenwasserstofflösungsmittel löslich ist und die Formel

$$M_\alpha MgR_pX_q$$

aufweist, in der

α, p und q jeweils unabhängig voneinander für 0 oder eine Zahl größer als 0 stehen,

$p+q=m\alpha+2$,

$0\leqq q/(\alpha+1)<2$,

m die Wertigkeit von M beudetet,

M ein Metall der ersten bis dritten Gruppe des Periodensystems der Elemente ist,

R mindestens eine Kohlenwasserstoffgruppe mit 1 bis 20 Kohlenstoffatomen ist und

X mindestens ein Wasserstoffatom oder eine elektronegative Gruppe ist, die ein Sauerstoffatom, ein Stickstoffatom oder ein Schwefelatom aufweist,

mit (b) mindestens einer Verbindung, die unter Halogeniden von Bor, Silicium, Germanium, Zinn, Phosphor, Antimon, Wismut und Zink sowie Chlorwasserstoff ausgewählt ist, wobei die Reaktion in einem Kohlenwasserstofflösungsmittel durchgeführt wird, abgeleitet ist, dadurch gekennzeichnet, daß Komponente (A) erhalten wird, indem (1) eine Organometallverbindung mit (2) der Übergangsmetallverbindung in Gegenwart von (3) des festen Reaktionsprodukts umgesetzt wird, und dadurch, daß das feste Reaktionsprodukt (3) vor seiner Verwendung in der Reaktion der Organometallverbindung (1) mit der Übergangsmetallverbindung (2) durch Dekantieren oder Filtration mit einem Kohlenwasserstofflösungsmittel gewaschen wird, und dadurch, daß dann, wenn die Übergangsmetallverbindung (2) eine Titanverbindung oder eine Vanadiumverbindung oder ein Gemisch aus einer Titanverbindung und einer Vanadiumverbindung darstellt, das Molverhältnis der Titan- und/oder Vanadiumverbindung zu dem Magnesiumatom in dem festen Reaktionsprodukt (3) 0,005 bis 5:1 und das Molverhältnis der Organometallverbindung (1) zu der Titan- und/oder Vanadiumverbindung 0,05 bis 20:1 beträgt und daß dann, wenn die Übergangsmetallverbindung (2) ein Gemisch aus einer Titanverbindung und einer Zirkoniumverbindung darstellt, das Molverhältnis der Titanverbindung und der Zirkoniumverbindung zu dem Magnesiumatom in dem festen Reaktionsprodukt (3) 0,001 bis 0,35:1 und das Molverhältnis der Organometallverbindung (1) zu der Titan- und Zirkoniumverbindung 0,1 bis 100:1 beträgt.

2. Katalysator gemäß Anspruch 1, dadurch gekennzeichnet, daß die Organomagnesiumverbindung (a) die Formel

$$M_\alpha MgR_pX_qD_r$$

hat, in der M, α, p und q die vorstehend definierten Bedeutungen haben, D eine Elektronen abgebende organische Verbindung und r eine Zahl größer als 0 bedeuten.

3. Katalysator gemäß Anspruch 2, worin D ein Ether, ein Siloxan, ein Amin oder ein Ester einer organischen Säure ist.

4. Katalysator gemäß Anspruch 2 oder 3, in dem r in der Organomagnesiumverbindung (a) des festen Reaktionsprodukts (3) $0\leqq r\leqq 10$ bedeutet.

5. Katalysator gemäß Anspruch 4, in dem r in der Organomagnesiumverbindung (a) des festen Reaktionsprodukts (3) $0\leqq r\leqq 2$ bedeutet.

6. Katalysator gemäß einem der vorhergehenden Patentansprüche, dadurch gekennzeichnet, daß das feste Reaktionsprodukt (3) ein Reaktionsprodukt der Organomagnesiumverbindung (a), der Verbindung (b) und eines festen anorganischen Oxids (c) it.

7. Katalysator gemäß Anspruch 6, wobei das feste anorganische Oxid (c) mindestens eine unter Siliziumdioxid, Aluminiumoxid, Siliciumdioxid - Aluminiumoxid, Magnesiumoxid, Thoriumoxid und Zirkoniumoxid gewählte Verbindung ist.

8. Katalysator gemäß Anspruch 6 oder 7, in dem die Menge der Organomagnesiumverbindung (a) 0,05 mMol bis 100 mMol pro Gramm des festen anorganischen Oxids (c) ist.

9. Katalysator gemäß einem der Ansprüche 1 bis 5, dadurch gekennzeichnet, daß das feste Reaktionsprodukt (3) ein Reaktionsprodukt der Verbindungen (a) und (b) oder (a), (b) und (c) mit einer Elektronen abgebenden organischen Verbindung (d) ist.

10. Katalysator gemäß Anspruch 9, wobei die Elektronen abgebende organische Verbindung (d) ein Ether, ein Siloxan, ein Amin oder ein Ester einer organischen Säure ist.

11. Katalysator gemäß Anspruch 9 oder 10, in dem das Molverhältnis der Elektronen abgebenden organischen Verbindung (d) zu dem Magnesiumatom in dem festen Reaktionsprodukt (3) 0,01 bis 100:1 beträgt.

12. Katalysator gemäß einem der vorhergehenden Patentansprüche, dadurch gekennzeichnet, daß die Organometallverbindung (1) mit der Übergangsmetallverbindung in Gegenwart eines festen Reaktionsprodukts (3), welches aus einer Reaktionslösung zu dessen Herstellung abgetrennt worden ist, umgesetzt wird.

13. Katalysator gemäß einem der vorhergehenden Patentansprüche, dadurch gekennzeichnet, daß M in der Organomagnesiumverbindung (a) des festen Reaktionsprodukts (3) Lithium-, Beryllium-, Bor-, Aluminium- oder Zink-Metall ist.

14. Katalysator gemäß einem der vorhergehenden Patentansprüche, dadurch gekennzeichnet, daß $\alpha$ in der Organomagnesiumverbindung (a) des festen Reaktionsprodukts (3) weniger als oder gleich 1 beträgt.

15. Katalysator gemäß Anspruch 14, dadurch gekennzeichnet, daß $\alpha$ in der Organomagnesiumverbindung (a) des festen Reaktionsprodukts (3) 0,01 bis 0,5 beträgt.

16. Katalysator gemäß einem der vorhergehenden Patentansprüche, bei dem X in der Organomagnesiumverbindung (a) des festen Reaktionsprodukts (3) $OR^1$, $OSiR^2R^3R^4$, $NR^5R^6$, $SR^7$ oder

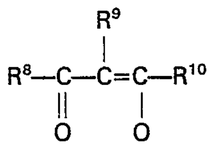

ist, worin $R^1$, $R^7$, $R^8$ und $R^{10}$ jeweils unabhängig voneinander eine Kohlenwasserstoffgruppe mit 1 bis 20 Kohlenstoffatomen bedeuten und $R^2$, $R^3$, $R^4$, $R^5$, $R^6$ und $R^9$ jeweils unabhängig voneinander ein Wasserstoffatom oder eine Kohlenwasserstoffgruppe mit 1 bis 20 Kohlenstoffatomen bedeuten.

17. Katalysator gemäß einem der vorhergehenden Patentansprüche, worin q in der Organomagnesiumverbindung (a) des festen Reaktionsprodukts (3) bedeutet $0=q/(\alpha+1)\leqq 1,5$.

18. Katalysator gemäß einem der vorhergehenden Patentansprüche, worin die Organometallverbindung (1) eine Organolithiumverbindung, eine Organomagnesiumverbindung, eine Organoaluminiumverbindung oder eine Organozinkverbindung ist.

19. Katalysator gemäß Anspruch 18, worin die Organometallverbindung (1) ein Alkylaluminium, welches ein Halogenatom oder eine elektronegative Gruppe enthält, ist.

20. Katalysator gemäß einem der vorhergehenden Patentansprüche, worin die Übergangsmetallverbindung (2) eine Titan- oder Vanadiumverbindung, die mindestens ein Halogenatom aufweist, oder ein Gemisch davon ist.

21. Katalysator gemäß Anspruch 20, worin das Atomverhältnis von Vanadium zu Titan in dem Gemisch 0,02 bis 50:1 beträgt.

22. Katalysator gemäß einem der Ansprüche 1 bis 19, worin die Übergangsmetallverbindung (2) ein Gemisch aus einer Titanverbindung und einer Zirkoniumverbindung mit mindestens drei Alkoxygruppen ist.

23. Katalysator gemäß Anspruch 22, worin das Atomverhältnis von Zirkonium zu Titan 0,2 bis 10:1 beträgt.

24. Katalyastor gemäß einem der vorhergehenden Patentansprüche, wobei die Reaktion zwischen der Organomagnesiumverbindung (a) und der Verbindung (b) bei einer Temperatur von −50°C bis 150°C durchgeführt wird.

25. Katalysator gemäß einem der vorhergehenden Patentansprüche, worin das Molverhältnis der Verbindung (b) zu der Organomagnesiumverbindung (a) 0,01 bis 100:1 beträgt.

26. Katalysator gemäß einem der vorhergehenden Patentansprüche, worin die Organometallkomponente (B) mindestens eine der Verbindungen: Organoaluminiumverbindung, Organozinkverbindung und Organomagnesiumverbindung ist.

27. Katalysator gemäß Anspruch 26, worin die Organoaluminiumverbindung ein Trialkylaluminium, ein Alkylaluminiumhydrid, ein Alkylaluminiumhalogenid, ein Alkylaluminiumalkoxid, ein Alkylaluminiumsiloxid oder ein Reaktionsprodukt eines Trialkylaluminiums und eines konjugierten Diens ist.

28. Katalysator gemäß einem der vorhergehenden Patentansprüche, worin das Molverhältnis der Organometallkomponente (B) zu dem Übergangsmetall in der festen Katalysatorkomponente (A) 3 bis 1000:1 ist.

29. Katalysator gemäß einem der vorhergehenden Patentansprüche, enthaltend die

Katalysatorkomponente (A), die Organometallkomponente (B) und einen halogenierten Kohlenwasserstoff (C).

30. Katalysator gemäß Anspruch 29, worin das Molverhältnis des halogenierten Kohlenwasserstoffes (C) zu der Organometallkomponente (B) 0,01 bis 100:1 beträgt.

31. Verfahren zur Polymerisation eines Olefins, bei dem das Olefin mit einem Katalysator gemäß einem der Ansprüche 1 bis 30 in Berührung gebracht wird.

32. Verfahren gemäß Anspruch 31, worin das Olefin Ethylen oder ein Gemisch aus Ethylen und mindestens einer der Verbindungen Propylen, 1-Buten, 1-Penten, 1-Hexen, 1-Hepten, 1-Octen, 1-Nonen, 1-Decen, 1-Dodecen, 1-Tetradecen und 1-Methyl-1-penten ist.

**Revendications**

1. Catalyseur utile pour polymériser des oléfines qui comprend un constituant solide de catalyseur (A) et un constituant organométallique (B), le constituant (A) provenant d'un composé de métal de transition choisi parmi un composé de titane, un composé de vanadium, un mélange d'un composé de titane et d'un composé de vanadium et un mélange d'un composé de titane et d'un composé de zirconium, et d'un produit solide de réaction de (a) un composé organomagnésien soluble dans un solvant hydrocarboné et de formule

$$M_{\alpha}MgR_{p}X_{q}$$

dans laquelle

α, p et q sont chacun indépendamment l'un de l'autre 0 ou un nombre supérieur à 0,
p+q=mα+2,
0≦q/(α+1)<2,
m est la valence de M,
M est un métal des premier et troisième groupes de la Classification Périodique des Eléments,
R est au moins un groupe hydrocarboné ayant de 1 à 20 atomes de carbone, et
X est au moins un atome d'hydrogène ou un groupe électronégatif contenant un atome d'oxygène, un atome d'azote ou un atome de soufre, avec (b) au moins un composé choisi parmi des halogénures de bore, des halogénures de silicium, des halogénures de germanium, des halogénures d'étain, des hlaogénures de phosphore, des halogénures d'antimoine, des halogénures de bismuth, des halogénures de zinc et le chlorure l'hydrogène, la réaction étant effectuée dans un solvant hydrocarboné, caractérisé en ce que le constituant (A) est obtenu en mettant à réagir (1) un composé organométallique sur (2) le composé de métal de transition en la présence de (3) le produit solide de réaction, et en ce que le produit solide de réaction (3) est lavé par un solvant hydrocarboné par décantation ou par filtration avant son utilisation dans la réaction du composé organométallique (1) et du composé de métal de transition (2), et en ce que quand le composé de métal de transition (2) est un composé de titane ou un composé de vanadium ou un mélange d'un composé de titane et d'un composé de vanadium, le rapport molaire du composé de titane et/ou de vanadium à l'atome de magnésium du produit solide de réaction (3) est compris entre 0,005 et 5:1 et le rapport molaire du composé organométallique (1) au composé de titane et/ou de vanadium est compris entre 0,05 et 20:1, et quand le composé de métal de transition (2) est un mélange d'un composé de titane et d'un composé de zirconium, le rapport molaire du composé de titane et du composé de zirconium à l'atome de magnésium du produit solide de réaction (3) est compris entre 0,001 et 0,35:1, et le rapport molaire du composé organométallique (1) au composé de titane et de zirconium est compris entre 0,1 et 100:1.

2. Catalyseur suivant la revendication 1, caractérisé en ce que le composé organomagnésien (a) a la formule

$$M\alpha MgR_{p}X_{q}D_{r}$$

dans laquelle M, α, p et q sont les significations définies ci-dessus, D est un composé organique donneur d'électron, et r est un nombre supérieur à 0.

3. Catalyseur suivant la revendication 2, dans lequel D est un éther, un siloxane, une amine ou un ester d'un acide organique.

4. Catalyseur suivant la revendication 2 ou 3, dans lequel r dans le composé organomagnésien (a) du produit solide de réaction (3) est tel que 0≦r≦10.

5. Catalyseur suivant la revendication 4, dans lequel r dans le composé organomagnésien (a) du produit solide de réaction (3) est tel que 0≦r≦2.

6. Catalyseur suivant l'une quelconque des revendications précédentes, caractérisé en ce que le produit solide de réaction (3) est un produit de réaction du composé organomagnésien (a), du composé (b) et d'un oxyde solide minéral (c).

7. Catalyseur suivant la revendication 6, dans lequel l'oxyde solide minéral (c) est au moins un composé choisi parmi la silice, l'alumine, la sicile-alumine, la magnésie, l'oxyde de thorium et la zircone.

8. Catalyseur suivant la revendication 6 ou 7, dans lequel la quantité de composé organomagnésien (a) est comprise entre 0,05 mmole et 100 mmoles par gramme de l'oxyde solide minéral (c).

9. Catalyseur suivant l'une quelconque des revendications 1 à 5, caractérisé en ce que le produit solide de réaction (3) est un produit de réaction des composés (a) et (b) ou (a), (b) et (c) et d'un composé organique donneur d'électron (d).

10. Catalyseur suivant la revendication 9, dans lequel le composé organique donneur d'électron (d) est un éther, un siloxane, une amine ou un ester d'un acide organique.

11. Catalyseur suivant la revendication 9 ou 10, dans lequel le rapport molaire du composé organique donneur d'électron (d) à l'atome de magnésium du produit solide de réaction (3) est compris entre 0,01 et 100:1.

12. Catalyseur suivant l'une quelconque des revendications précédentes, caractérisé en ce que le composé organométallique (1) est mis à réagir sur le composé de métal de transition en la présence d'un produit solide de réaction (3) qui a été séparé d'une solution réactionnelle destinée à le préparer.

13. Catalyseur suivant l'une quelconque des revendications précédentes, caractérisé en ce que M, dans le composé organomagnésien (a) du produit solide de réaction (3), est le lithium, le béryllium, le bore l'aluminium ou le zinc métallique.

14. Catalyseur suivant l'une quelconque des revendications précédentes, caractérisé en ce que α, dans le composé organomagnésien (a) du produit solide de réaction (3), est inférieur ou égal à 1.

15. Catalyseur suivant la revendication 14, caractérisé en ce que α, dans le composé organomagnésien (a) du produit solide de réaction (3), est compris entre 0,01 et 0,5.

16. Catalyseur suivant l'une quelconque des revendications précédentes, dans lequel X, dans le composé organomagnésien (a) du produit solide de réaction (3), est $OR^1$, $OSiR^2R^3R^4$, $NR^5R^6$, $SR^7$ ou

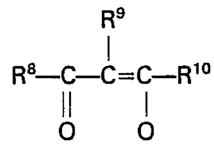

dans lesquelles $R^1$, $R^7$, $R^8$ et $R^{10}$ sont chacun indépendamment un groupe hydrocarboné ayant de 1 à 20 atomes de carbone et $R^2$, $R^3$, $R^4$, $R^5$, $R^6$ et $R^9$ sont chacun indépendamment un atome d'hydrogène ou un groupe hydrocarboné ayant de 1 à 20 atomes de carbone.

17. Catalyseur suivant l'une quelconque des revendications précédentes, dans lequel q, dans le composé organomagnésien (a) du produit solide de réaction (3), est tel que $0 \leqq q/(\alpha+1) \leqq 1,5$.

18. Catalyseur suivant l'une quelconque des revendications précédentes, dans lequel le composé organométallique (1) est un composé organolithien, un composé organomagnésien, un composé organoaluminique ou un composé organozincique.

19. Catalyseur suivant la revendication 18, dans lequel le composé organique métallique (1) est un alcoylaluminium contenant un atome d'halogène ou un groupe électronégatif.

20. Catalyseur suivant l'une quelconque des revendications précédentes, dans lequel le composé de métal de transition (2) est un composé de titane ou un composé de vanadium ayant au moins un atome d'halogène, ou un mélange de ceux-ci.

21. Catalyseur suivant la revendication 20, dans lequel le rapport atomique du vanadium au titane dans le mélange est compris entre 0,02 et 50:1.

22. Catalyseur suivant l'une quelconque des revendications 1 à 19, dans lequel le composé de métal de transition (2) est un mélange d'un composé de titane et d'un composé de zirconium ayant au moins trois groupes alcoxy.

23. Catalyseur suivant la revendication 22, dans lequel le rapport atomique du zirconium au titane est compris entre 0,2 et 10:1.

24. Catalyseur suivant l'une quelconque des revendications précédentes, dans lequel la réaction entre le composé organomagnésien (a) et le composé (b) est effectuée à une température de −50°C à 150°C.

25. Catalyseur suivant l'une quelconque des revendications précédentes, dans lequel le rapport molaire du composé (b) au composé organomagnésien (a) est compris entre 0,01 et 100:1.

26. Catalyseur suivant l'une quelconque des revendications précédentes, dans lequel le constituant organométallique (B) est l'un au moins d'un composé organoaluminique, d'un composé organozincique, et d'un organomagnésien.

27. Catalyseur suivant la revendication 28, dans lequel le composé organoaluminique est un trialcoylaluminium, un hydrure d'alcoylaluminium, un halogénure d'alcoylaluminium, un halogénure d'alcoylaluminium et un alcoolate d'alcoylaluminium, un siloxyde d'alcoylaluminium ou un produit de la réaction d'un trialcoylaluminium et d'un diène conjugué.

28. Catalyseur suivant l'une quelconque des revendications précédentes, dans lequel le rapport molaire du composé organométallique (B) au métal de transition dans le constituant solide du catalyseur (A) est compris entre 3 et 1000:1.

29. Catalyseur suivant l'une quelconque des revendications précédentes, qui comprend le constituant de catalyseur (A), le constituant organométallique (B) et un hydrocarbure halogéné (C).

30. Catalyseur suivant la revendication 29, dans lequel le rapport molaire de l'hydrocarbure halogéné (C) au constituant organométallique (B) est compris entre 0,01 et 100:1.

31. Procédé de polymérisation d'une oléfine qui consiste à mettre l'oléfine en contact avec un catalyseur tel que revendiqué à l'une quelconque des revendications 1 à 30.

32. Procédé suivant la revendication 31, dans lequel l'oléfine est l'éthylène ou un mélange d'éthylène et d'au moins l'un des monomères que sont le propylène, le 1-butène, le 1-pentène, le 1-hexène, le 1-heptène, le 1-octène, le 1-nonène, le 1-décène, le 1-dodécène, le 1-tétradécène et le 1-méthyl-1-pentène.